# EUROPÄISCHE PATENTSCHRIFT

(11) **EP 3 355 717 B1**
(45) Veröffentlichungstag und Bekanntmachung des Hinweises auf die Patenterteilung: **07.07.2021**
(21) Anmeldenummer: 16774670.0
(22) Anmeldetag: 29.09.2016
(51) Int. Cl.: A23L 3/04

(54) **ANLAGE UND VERFAHREN FÜR DIE PASTEURISIERUNG VON LEBENSMITTELN**
SYSTEM AND METHOD FOR PASTEURIZING FOODS
INSTALLATION ET PROCÉDÉ POUR LA PASTEURISATION DE PRODUITS ALIMENTAIRES

(30) Priorität: 29.09.2015 AT 508222015
(43) Veröffentlichungstag der Anmeldung: 08.08.2018
(73) Patentinhaber: Red Bull GmbH, 5330 Fuschl am See (AT)
(72) Erfinder: CONCIN, Roland, 5330 Fuschl am See (AT)
(74) Vertreter: Burger, Hannes
(86) Internationale Anmeldenummer: PCT/EP2016/073344
(87) Internationale Veröffentlichungsnummer: WO 2017/055501

(56) Entgegenhaltungen:
- WO-A1-2013/023739
- DE-A1- 10 102 041
- DE-A1-102005 030 924
- DE-A1-102008 057 495
- DE-A1-102010 060 919
- DE-A1-102011 055 147
- DE-A1-102013 112 398

## Beschreibung

Die Erfindung betrifft eine Anlage für die Pasteurisierung von in verschlossenen Behältnissen abgefüllten Lebensmitteln, sowie ein Verfahren für die Pasteurisierung von in Behältnissen abgefüllten Lebensmitteln.

Eine Pasteurisierung von Lebensmitteln, insbesondere flüssigen Lebensmitteln, wird heutzutage häufig vorgenommen, um potentiell schädliche Mikroorganismen in den Lebensmitteln abzutöten, und unter anderem die Haltbarkeit der Lebensmittel zu erhöhen. Bei einer verbreitet angewandten Methode werden die Lebensmittel dabei vorab in Behältnisse abgefüllt, die Behältnisse verschlossen und anschließend pasteurisiert. Häufig kommen sogenannte Tunnelpasteure zum Einsatz, bei welchen die verschlossenen Behältnisse anfangs in Behandlungszonen mit sukzessive ansteigender Temperatur eines Prozessmediums beaufschlagt, zum Beispiel berieselt oder überschüttet werden. Darauf folgen Behandlunsgzonen, in welchen die Behältnisse in dieser Weise auf Pasteurisierungstemperatur gebracht und für eine bestimmte, ausreichende Zeitdauer gehalten werden. Anschließend erfolgt ein sukzessives Abkühlen in weiteren Behandlungszonen.

Für einen typischen Pasteur, zum Beispiel ein Tunnelpasteur wird demgemäß sowohl Kühlungs- als auch Wärmeenergie benötigt, einerseits um die Prozessflüssigkeit insbesondere für die Erwärmungszonen und die Pasteurisierungszonen zu erwärmen, und andererseits für die Abkühlzonen abzukühlen. Aus dem Stand der Technik ist bekannt, zum Einbringen von Wärme- und Kühlungsenergie Wärmepumpen zu verwenden. Aus der DE 10 2013 112 398 A1 ist beispielsweise eine Vorrichtung und ein Verfahren bekannt geworden, bei welchem die Wärmeenergie der Prozessflüssigkeit auf einem niedrigem Temperaturniveau mittels einer Wärmepumpe zum Erwärmen der Prozessflüssigkeit in einem Puffertank auf ein höheres Temperaturniveau benutzt wird. Bei dem in der DE 10 2013 112 398 A1 offenbarten Pasteur ist die Wärmepumpe direkt bzw. unmittelbar über Wärmetauscher mit Prozessflüssigkeit führenden Leitungen, bzw. spezifischen Behandlungszonen verbunden.

In solchen Fällen ist es nur unter günstigen Bedingungen möglich, durch den Einsatz einer Wärmepumpe mit verhältnismäßig geringer Aufwendung an zum Beispiel elektrischer Energie, große Mengen an Kühlungs- bzw. Wärmeenergie bereitzustellen. Solche günstigen Bedingungen liegen dabei nur dann vor, wenn einerseits hoher Bedarf an Kühlungs- und Wärmeleistung im Pasteur besteht, und andererseits gleichzeitig einander zumindest im Wesentlichen entsprechender Kühlungsleistungsbedarf und Wärmeleistungsbedarf im Pasteur besteht. Häufig ist dies jedoch nicht der Fall, und kann folglich bei vorbekannten Pasteuren mit Wärmepumpen, beispielsweise bei dem in der DE 10 2013 112 398 A1 offenbarten Pasteurs, ein Betrieb der Wärmepumpe auf konstant hohem Leistungsniveau nicht oder zumindest nur sehr eingeschränkt erfolgen. Daher besteht Verbesserungsbedarf hinsichtlich eines möglichst energie- und kosteneffizienten Betriebs von derartigen Pasteuren.

Aufgabe der vorliegenden Erfindung war es, die bestehenden Nachteile des Standes der Technik zu überwinden und eine verbesserte Vorrichtung bzw. Pasteurisierungsanlage, sowie ein verbessertes Verfahren für die Pasteurisierung von Lebensmitteln zur Verfügung zu stellen.

Diese Aufgabe wird einerseits durch eine Anlage und ein Verfahren gemäß den Ansprüchen 1 und 14 gelöst.

Es wird eine Anlage für die Pasteurisierung von in verschlossenen Behältnissen abgefüllten Lebensmitteln durch Beaufschlagung der Behältnisse mit einer Prozessflüssigkeit bereitgestellt.
Die Anlage umfasst wenigstens eine Anwärmzone, wenigstens eine Pasteurisierungszone und wenigstens eine Abkühlzone, sowie ein Fördermittel zum Transport der Behältnisse in einer Transportrichtung aufeinanderfolgend durch die Anwärmzone(n), die Pasteurisierungszone(n) und die Abkühlzone(n).
Des Weiteren umfasst die Anlage einen Kältetank und einen Wärmetank zum bedarfsweisen Ableiten und Sammeln der Prozessflüssigkeit aus wenigstens einigen der Zonen.
Dabei ist der Kältetank mit einer Seite eines Kühlungswärmetauschers leitungsverbunden. Die andere Seite des Kühlungswärmetauschers ist zur Übertragung von Kühlungsenergie mit einem Kühlkreis umfassend ein Kälteübertragungsmittel einer Wärmepumpe leitungsverbunden.

Der Wärmetank ist mit einer Seite eines Heizungswärmetauschers leitungsverbunden. Die andere Seite des Heizungswärmetauschers ist zur Übertragung von Wärmeenergie mit einem Heizkreis umfassend ein Wärmeübertragungsmittel der Wärmepumpe leitungsverbunden.

Im Besonderen ist vorgesehen, dass der Kühlkreis einen als hydraulische Weiche eingebundenen Kältepufferspeicher umfasst, welcher in einem oberen Endbereich mit einem Eingang des Kälteübertragungsmittels der Wärmepumpe und in einem unteren Endbereich mit einem Ausgang des Kälteübertragungsmittels, sowie in einem oberen Endbereich mit einem Ausgang des Kühlungswärmetauschers und in einem unteren Endbereich mit einem Eingang des Kühlungswärmetauschers leitungsverbunden ist

Außerdem ist vorgesehen, dass der Heizkreis einen als hydraulische Weiche eingebundenen Wärmepufferspeicher umfasst, welcher an einem oberen Endbereich mit einem Ausgang des Wärmeübertragungsmittels der Wärmepumpe und in einem unteren Endbereich mit einem Eingang des Wärmeübertragungsmittels, sowie in einem oberen Endbereich mit einem Eingang des Heizungswärmetauschers und in einem unteren Endbereich mit einem Ausgang des Heizungswärmetauschers leitungsverbunden ist.

Durch diese Merkmale ist sowohl im Kühlkreis als auch im Heizkreis jeweils ein Reservoir bereitgestellt, in welchem die von der Wärmepumpe erzeugte Kühlungsenergie bzw. Wärmeenergie via ein jeweils Kühlungsenergie respektive Wärmeenergie tragendes Medium gespeichert werden kann. Diese (zwischen)gespeicherte Kühlungs- bzw. Wärmeenergie kann bedarfsabhängig aus dem Kältepufferspeicher bzw. den Wärmepufferspeicher entnommen, und der Prozessflüssigkeit über den Kühlungswärmetauscher bzw. den Heizungswärmetauscher zugeführt werden. Auf diese Weise können insbesondere Energieengpässe vermieden bzw. zumindest minimiert werden, und kann außerdem ein Einsatz von energieineffizienten, zusätzlichen Kühlungs- und Heizungsvorrichtungen zumindest weitestgehend hintangehalten werden. Die über die Wärmetauscher bedarfsabhängig entnommene Kühlungs- bzw. Wärmeenergie kann mittels des Kälteübertragungsmittels bzw. des Wärmeübertragungsmittels der Wärmepumpe in den Kältepufferspeicher bzw. in den Wärmepufferspeicher wieder eingebracht werden, wodurch ein energetisch und wirtschaftlich hocheffizienter Betrieb der Pasteurisierungsanlage ermöglicht wird.

Dies vor allem auch im Falle von stark schwankenden Kühl- und/oder Heizleistungsabnahmen bzw. Leistungsbedarf, zum Beispiel bei einem Wechsel zwischen Vollbetrieb und zeitweiligem Stillstand der Anlage. Ein Stillstand der Anlage kann beispielsweise bei einem Chargenwechsel, oder bei einer fälligen Wartungsoperation oder Dergleichen eintreten. Des Weiteren kann eine Wärmepumpe mit hoher Energieleistung eingesetzt bzw. verwendet werden, da ein Reservoir zur Aufnahme und Zwischenspeicherung der von der Wärmepumpe erzeugten Kühlungsenergie und Wärmeenergie bereitgestellt ist. Weiters kann die Zufuhr von Frischwasser minimiert werden, was sowohl in ökologischer als auch in verfahrensökonomischer Hinsicht vorteilhaft ist.

Die Seite des Kühlungswärmetauschers, welche von einem Kühlmedium durchströmt wird, kann auch als Primärseite bezeichnet werden, die Seite des Kühlungswärmetauschers, welche von der Prozessflüssigkeit durchströmt wird kann als Sekundärseite bezeichnet werden. Ebenso kann die Seite des Heizungswärmetauschers, welche von einem Heizmedium durchströmt wird als Primärseite, und die Seite des Heizungswärmetauschers, welche von der Prozessflüssigkeit durchströmt wird, als Sekundärseite des Heizungswärmetausches bezeichnet werden.

Des Weiteren ist vorgesehen, dass zur Abdeckung von Kühlungsleistungsspitzen ein mit dem Kältetank leitungsverbundenes Rückkühlmittel vorgesehen ist.

Hierbei ist das Rückkühlmittel durch einen Kühlturm gebildet. Dadurch ist eine Sicherheitsreserve im Sinne einer zusätzlichen Notkühlung geschaffen, welche auch beispielsweise bei einem grundsätzlich möglichen Ausfall der Wärmepumpe oder bei einer Wartung der Wärmepumpe zum Einsatz kommen kann.

Außerdem kann vorgesehen sein, dass in einem ausgangsseitig des Heizungswärmetauschers angeordnetem Vorlauf zur zusätzlichen Erhitzung der Prozessflüssigkeit ein Heizmittel vorgesehen ist.

Hierbei kann das Heizmittel durch einen mit Wasserdampf beaufschlagten Wärmetauscher gebildet sein. Damit ist ein Mittel zur weiteren Erhitzung der Prozessflüssigkeit im Bedarfsfall geschaffen. Das zusätzliche Heizmittel, beispielsweise der mit Wasserdampf beaufschlagte Wärmetauscher kann zum Beispiel beim Erfordernis besonders hoher Pasteurisierungstemperaturen zum Einsatz kommen. Außerdem bildet das zusätzliche Heizmittel wiederum eine Sicherheitsreserve zum Einbringen von Wärmeenergie in den Vorlauf der Prozessflüssigkeit.

Bei einer weiteren Ausführungsform kann es von Vorteil sein, wenn der Kältepufferspeicher im Kühlkreis ein Speichervolumen zwischen 0,01 m³ und 3 m³ pro 1 kW Kühlleistung der Wärmepumpe aufweist. Dadurch ist ein ausreichendes Pufferspeichervolumen bereitgestellt, um einen möglichst konstanten, gleichmäßigen Betrieb der Wärmepumpe auf hohem Leistungsniveau zu ermöglichen. Dadurch kann die Energieeffizienz und damit die Wirtschaftlichkeit der Pasteurisierungsanlage weiter verbessert werden. Vorzugsweise weist der Kältepufferspeicher ein Speichervolumen zwischen 0,02 m³ und 1 m³ pro 1 kW Kühlleistung der Wärmepumpe auf.

Des Weiteren kann es zweckmäßig sein, dass eine bauliche Höhe des Kältepufferspeichers zwischen 0,2 m und 0,4 m pro 1 m³ Volumen des Kältepufferspeichers beträgt. Auf diese Weise kann der Kältepufferspeicher in der Art eines Schichtspeichers betrieben werden. Insbesondere ist es möglich, dass im Betrieb der Pasteurisierungsanlage dem Kühlungswärmetauscher beständig verhältnismäßig kaltes Kühlmedium aus dem unteren Endbereich des Kältepufferspeichers zugeführt wird. Dadurch steht zur Abkühlung der Prozessflüssigkeit in dem Kühlungswärmetauscher selbst nach langanhaltendem Betrieb der Pasteurisierungsanlage unter hohem Kühlleistungsbedarf lange Zeit ausreichend kaltes Kühlmedium aus dem unteren Endbereich des Kältepufferspeichers zur Verfügung. Die durch kühlungswärmetauscherseitige Entnahme an kaltem Kühlmedium aus dem Kältepufferspeicher entnommene Kühlungsenergie kann durch Zuführung von wärmeren Kühlmedium aus einem oberen Endbereich des Kältepufferspeichers, Abkühlen des entnommenen Kühlmediums über das Kälteübertragungsmittel, und Zuleitung des abgekühlten Mediums in einen unteren Endbereich wieder in den Kältepufferspeicher nachgeliefert werden. Im Falle eines zylindrisch ausgeführten Kältepufferspeichers kann das Verhältnis von Höhe zu Durchmesser beispielsweise im Bereich von 1 bis 3 zu 1 liegen.

Hierbei kann außerdem vorgesehen sein, dass im Inneren des Kältepufferspeichers wenigstens in dem unteren Endbereich, in einem mittleren Bereich und in einem oberen Endbereich jeweils zumindest ein Temperatursensor angeordnet ist. Dadurch ist eine Erfassung der Temperaturen des Kühlmediums in den jeweiligen Bereichen des Kältepufferspeichers ermöglicht. Dies ist insbesondere zweckmäßig bei Betrieb des Kältepufferspeichers als Schichtspeicher. Auf diese Weise lässt sich insbesondere der Ladezustand des Kältepufferspeichers bzw. das Ausmaß der Beladung mit Kühlungsenergie feststellen bzw. überwachen. Die Temperaturinformationen aus den Bereichen im Inneren des Pufferspeichers können zwecks automatisierter und/oder manueller Regelung vorteilhafterweise an eine übergeordnete Steuerungsvorrichtung der Pasteurisierungsanlage übertragen werden.

Betreffend den Heizkreis kann vorgesehen sein, dass der Wärmepufferspeicher ein Speichervolumen zwischen 0,01 m³ und 3 m³ pro 1 kW Heizleistung der Wärmepumpe aufweist. Dadurch ist auch zur Speicherung der durch die Wärmepumpe erzeugten Wärmeenergie ein ausreichendes Pufferspeichervolumen bereitgestellt, um einen möglichst konstanten, gleichmäßigen Betrieb der Wärmepumpe auf hohem Leistungsniveau zu ermöglichen. Vorzugsweise weist der Wärmepufferspeicher ein Speichervolumen zwischen 0,02 m³ und 1 m³ pro 1 kW Heizleistung der Wärmepumpe auf.

Bei einer Ausgestaltungsform kann es zweckmäßig sein, wenn eine bauliche Höhe des Wärmepufferspeichers zwischen 0,2 m und 0,4 m pro 1 m³ Volumen des Wärmepufferspeichers beträgt. So kann auch der Wärmepufferspeicher in der Art eines Schichtspeichers betrieben werden. Im Falle eines zylindrisch ausgeführten Wärmepufferspeichers kann das Verhältnis von Höhe zu Durchmesser beispielsweise im Bereich von 1 bis 3 zu 1 liegen.

Auch bei dem Wärmepufferspeicher kann vorgesehen sein, dass im Inneren wenigstens in dem unteren Endbereich, in einem mittleren Bereich und in einem oberen Endbereich jeweils zumindest ein Temperatursensor angeordnet ist. Wiederum ist eine Erfassung der Temperaturen des Heizmediums in den jeweiligen Bereichen des Wärmepufferspeichers ermöglicht, und kann die Beladung des Wärmepufferspeichers mit Wärmeenergie festgestellt und überwacht werden.

Zu Regelungszwecken kann weiterhin vorgesehen sein, dass der Kühlkreis zwischen dem Kälteübertragungsmittel und dem Kältepufferspeicher eine Bypassleitung aufweist, welcher wenigstens ein Durchflussregelvorrichtung zugeordnet ist. Diese Bypassleitung kann in Verbindung mit der Durchflussregelvorrichtung für Regelungszwecke im Kühlkreis eingesetzt werden, beispielsweise zur gezielten Einstellung eines Temperaturniveaus des Kühlmediums.

Es kann aber auch im Heizkreis zwischen dem Wärmeübertragungsmittel und dem Wärmepufferspeicher eine Bypassleitung vorgesehen sein, welcher wenigstens ein Durchflussregelvorrichtung zugeordnet ist. Auch diese Bypassleitung kann in Verbindung mit der Durchflussregelvorrichtung zu Regelungszwecken verwendet werden.

Für eine hinsichtlich Energieeffizienz sowie Kühlungsleistungs- sowie Temperaturkontrolle kann eine Weiterbildung zweckmäßig sein, bei welcher im Kühlkreis zur Zuführung eines Kühlmediums in den Kühlungswärmetauscher aus dem Kältepufferspeicher sowie zur Zuführung des Kühlmediums in das Kälteübertragungsmittel aus dem Kältepufferspeicher jeweils eine durchflussregelbare Pumpe angeordnet ist. Durch Regelung des Durchflusses des Kühlmediums über das Kälteübertragungsmittel respektive den Kühlungswärmetauscher kann sowohl die Bereitstellung und Zuführung von Kühlungsenergie an die Prozessflüssigkeit kontrolliert bzw. steuerungstechnisch gezielt durchgeführt werden, als auch das Temperaturniveau des Kühlmediums gezielt eingestellt werden. Beispielsweise kann durch Drosselung bzw. Verringerung der Durchflussgeschwindigkeit bzw. Fördermenge über das Kälteübertragungsmittel das Kühlmedium auf tiefere Temperaturen abgekühlt werden.

Ebenso kann eine Ausgestaltungsform sinnvoll sein, bei welcher im Heizkreis zur Zuführung eines Heizmediums in den Heizungswärmetauscher aus dem Wärmepufferspeicher sowie zur Zuführung des Heizmediums in das Wärmeübertragungsmittel aus dem Wärmepufferspeicher jeweils eine durchflussregelbare Pumpe angeordnet ist. Auch hierbei kann durch Regelung des Durchflusses des Kühlmediums über das Kälteübertragungsmittel respektive den Kühlungswärmetauscher sowohl die Bereitstellung und Zuführung von Kühlungsenergie an die Prozessflüssigkeit kontrolliert bzw. steuerungstechnisch gezielt durchgeführt werden, als auch das Temperaturniveau des Kühlmediums gezielt eingestellt werden.

Die Erfindung wird aber auch eigenständig und unabhängig durch ein Verfahren für die Pasteurisierung von in verschlossenen Behältnissen abgefüllten Lebensmitteln gelöst, wobei das Verfahren insbesondere mittels einer Anlage mit den angegeben Merkmalen ausführbar ist. Das Verfahren umfasst den Transport der Behältnisse mittels eines Fördermittels in einer Transportrichtung aufeinanderfolgend durch wenigstens eine Aufwärmzone, wenigstens eine Pasteurisierungszone und wenigstens eine Abkühlzone,
sowie die Beaufschlagung der Behältnisse in den jeweiligen Zonen mit einer geeignet temperierten Prozessflüssigkeit.
Dabei wird einer jeweiligen Zone Prozessflüssigkeit wenigstens teilweise aus einer anderen Zone, und/oder aus derselben Zone und/oder aus einem Kältetank und/oder über einen Vorlauf zugeführt.
Eine Teilmenge der Prozessflüssigkeit wird aus dem Kältetank entnommen, via einen Kühlungswärmetauscher abgekühlt und wieder in den Kältetank zurückgeführt, wobei an den Kühlungswärmetauscher von einem Kühlkreis umfassend ein Kälteübertragungsmittel einer Wärmepumpe Kühlungsenergie übertragen wird.
Die dabei in einem Heizkreis umfassend ein Wärmeübertragungsmittel der Wärmepumpe erzeugte Wärmeenergie wird zur bedarfsweisen Erhöhung der Temperatur der Prozessflüssigkeit in dem Vorlauf über einen Heizungswärmetauscher benutzt.
Im Besonderen ist vorgesehen, dass die in dem Kälteübertragungsmittel erzeugte Kühlungsenergie via ein durch das Kälteübertragungsmittel geführtes und dabei abgekühltes Kühlmedium in einen unteren Endbereich eines als hydraulische Weiche in den Kühlkreis eingebundenen Kältepufferspeicher eingeleitet, und Kühlmedium aus einem oberen Endbereich des Kältepufferspeichers in das Kälteübertragungsmittel zurückgeführt wird.
Die im Wärmeübertragungsmittel erzeugte Wärmeenergie wird via ein durch das Wärmeübertragungsmittel geführtes und dabei erhitztes Heizmedium in einen oberen Endbereich eines als hydraulische Weiche in dem Heizkreis eingebundenen Wärmepufferspeicher eingeleitet, und Heizmedium aus einem oberen Endbereich des Wärmepufferspeichers in das Wärmeübertragungsmittel zurückgeführt.

Durch Einleiten der durch die Wärmepumpe im Kälteübertragungsmittel erzeugten Kühlungsenergie in den unteren Endbereich des Kältepufferspeichers, kann die Kühlungsenergie im Kältepufferspeicher zwischengespeichert werden. Auf der anderen Seite kann die im Wärmeübertragungsmittel der Wärmepumpe erzeugte Wärmeenergie im Wärmepufferspeicher zwischengespeichert werden. Hierbei können die Kühlungs- bzw. Wärmeenergie bedarfsabhängig aus dem Kälte- bzw. dem Wärmepufferspeicher entnommen und via das Kühlmedium respektive das Heizmedium dem Kühlungswärmetauscher bzw. dem Heizungswärmetauscher zugeführt werden. Die über die beiden Wärmetauscher bedarfsabhängig entnommene Kühlungs- respektive Wärmeenergie kann via das über das Kälteübertragungsmittel geführte Kühlmedium bzw. via das über das Wärmeübertragungsmittel der Wärmepumpe geführte Heizmedium in den Kältepufferspeicher bzw. in den Wärmepufferspeicher wieder eingebracht werden, wodurch ein energetisch und wirtschaftlich hocheffizienter Betrieb der Pasteurisierungsanlage ermöglicht wird.

Bei einer Weiterbildung des Verfahrens kann vorgesehen sein, dass das Kühlmedium dem Kühlungswärmetauscher aus dem unteren Endbereich des Kältepufferspeichers zugeführt wird, und nach Durchtritt durch den Kühlungswärmetauscher in den oberen Endbereich des Kältepufferspeichers zurückgeführt wird. Dadurch kann dem Kühlungswärmetauscher besonders kaltes Kühlmedium zugeführt werden, wodurch die Prozessflüssigkeit, welche den Kühlungswärmetauscher stofflich vom Kühlmedium getrennt durchströmt, in effizienter Art und Weise abgekühlt werden. Bevorzugt werden die Prozessflüssigkeit und das Kühlmedium hierbei im Gegenstromprinzip durch den Kühlungswärmetauscher geführt.

Ebenso kann vorgesehen sein, dass das Heizmedium dem Heizungswärmetauscher aus einem oberen Endbereich des Wärmepufferspeichers zugeführt wird, und nach Durchtritt durch den Heizungswärmetauscher in einen unteren Endbereich des Wärmepufferspeichers zurückgeführt wird. Dadurch kann dem Heizungswärmetauscher Heizmedium mit besonders hoher Temperatur zugeführt werden, wodurch die Prozessflüssigkeit, welche den Heizungswärmetauscher vom Heizmedium stofflich getrennt durchströmt, in effizienter Art und Weise erhitzt werden. Bevorzugt werden die Prozessflüssigkeit und das Heizmedium wiederum im Gegenstromprinzip durch den Heizungswärmetauscher geführt.

Des Weiteren ist vorgesehen, dass die Prozessflüssigkeit in dem Kältetank bedarfsabhängig mittels eines als Kühlturm ausgebildeten Rückkühlmittels zusätzlich gekühlt wird. Dadurch können Kühlungsleistungsspitzen abgedeckt werden bzw. kann die Prozessflüssigkeit bei einem Stillstand der Wärmepumpe trotzdem abgekühlt werden.

Des Weiteren kann es zweckmäßig sein, wenn die Temperaturen des Kühlmediums im Kältepufferspeicher und die Temperaturen des Heizmediums im Wärmepufferspeicher mittels jeweils zumindest in einem unteren Endbereich, in einem mittleren Bereich und in einem oberen Endbereich des Kältepufferspeichers und des Wärmepufferspeichers angeordneter Temperatursensoren erfasst werden. Dies ist insbesondere sinnvoll wenn der Kältepufferspeicher bzw. der Wärmepufferspeicher als Schichtungsspeicher mit Temperaturschichtung des Kühlmediums, respektive des Heizmediums betrieben werden. Die Temperaturinformationen aus den jeweiligen Bereichen im Inneren des Kälte- und des Wärmepufferspeichers können zwecks automatisierter und/oder manueller Regelung vorteilhafterweise an eine übergeordnete Steuerungsvorrichtung der Pasteurisierungsanlage übertragen werden, insbesondere zur Überwachung des Ladezustandes.

Bei einer vorteilhaften Ausführungsform kann vorgesehen sein, dass eine jeweilig dem Kältepufferspeicher zugeführte und aus dem Kältepufferspeicher zur Zuführung in den Kühlungswärmetauscher entnommene Menge an Kühlmedium mittels durchflussregelbarer Pumpen an den jeweiligen Kühlbedarf und/oder ein erforderliches Temperaturniveau des Kühlmediums angepasst wird. Bei einem hohen Kühlbedarf kann so beispielsweise die Zufuhr an Kühlmedium aus dem Kältepufferspeicher in den Kühlungswärmetauscher erhöht werden. Zur Bereitstellung tieferer Temperaturen des Kühlmediums im Kältepufferspeicher, kann beispielsweise die Fördermenge an Kühlmedium über das Kälteübertragungsmittel verringert werden, um das Kühlmedium im Kälteübertragungsmittel auf tiefere Temperaturen abzukühlen.

Es kann auch zweckmäßig sein, wenn die Behältnisse in einer entlang der Transportrichtung am Ende angeordneten Abkühlzone mittels der Prozessflüssigkeit auf eine vorab festgelegte Zieltemperatur abgekühlt werden, und die Temperatur des Kühlmediums in dem unteren Endbereich des Kältepufferspeichers auf ein Temperaturniveau unterhalb dieser Zieltemperatur eingestellt wird. Dies ist insbesondere zweckmäßig bei der Pasteurisierung von Lebensmitteln mit empfindlichen Inhaltsstoffen, um einen Verlust an Geschmack, Nährwert oder eine Änderung der Konsistenz der Lebensmittel hintanzuhalten.

Des Weiteren kann vorgesehen sein, dass bei Erfassung einer Temperatur des Kühlmediums im unteren Endbereich des Kältepufferspeichers oberhalb einer Temperatur der Prozessflüssigkeit in dem Kältetank und/oder oberhalb einer vorab festlegbaren Schwelltemperatur, zumindest eine Teilmenge des Kühlmediums via eine Bypassleitung nach Austritt aus dem Kälteübertragungsmittel unmittelbar wieder in das Kälteübertragungsmittel zurückgeführt wird. Dadurch kann das Kühlmedium vor dem Einleiten in den unteren Endbereich des Kältepufferspeichers auf ein zum Abkühlen der Prozessflüssigkeit im Kühlungswärmetauscher geeignetes bzw. zweckmäßiges Temperaturniveau gebracht werden.

Es kann aber auch zweckmäßig sein, dass das Kühlmedium dem Kühlungswärmetauscher aus dem unteren Endbereich des Kältepufferspeichers erst dann zugeführt wird, wenn in dem unteren Endbereich des Kältepufferspeichers ein Mindesttemperaturniveau des Kühlmediums unterhalb einer vorab festlegbaren Schwelltemperatur eingestellt wurde. Auf diese Weise kann vermieden werden, dass das Kühlmedium dem Kühlungswärmetauscher bei einer zum Abkühlen der Prozessflüssigkeit nicht geeigneten bzw. zu hohen Temperatur zugeführt wird.

Schließlich kann auch eine Verfahrensführung vorgesehen sein, bei welcher in die Behältnisse vor deren Eintritt in eine in Transportrichtung am Anfang angeordnete Anwärmzone ein Inertgas in flüssiger Form zugesetzt wird. Beispielsweise kann flüssiges Kohlendioxid oder flüssiger Stickstoff in die Behältnisse eingeleitet werden. Dadurch können die Lebensmittel im Inneren der Behältnisse zusätzlich während der Pasteurisierung und auch danach geschützt werden. Insbesondere sind so unerwünschte oxidative Stoffwechselvorgänge durch Mikroorganismen hintangehalten. Durch die Zufuhr von flüssigem Inertgas können die Lebensmittel bzw. Behältnisse vor dem Eintritt in die Pasteurisierungsanlage abgekühlt werden, was sich auf den Energiebedarf während des Pasteurisierungsvorgangs auswirken kann. Durch die Zwischenspeicherung von Kühlungs- und Wärmeenergie in dem Kältepufferspeicher bzw. den Wärmepufferspeicher ist dennoch eine reibungslose und energieeffiziente Verfahrensführung ermöglicht.
Zum besseren Verständnis der Erfindung wird diese anhand der nachfolgenden Figur näher erläutert.

Es zeigt in stark vereinfachter, schematischer Darstellung:

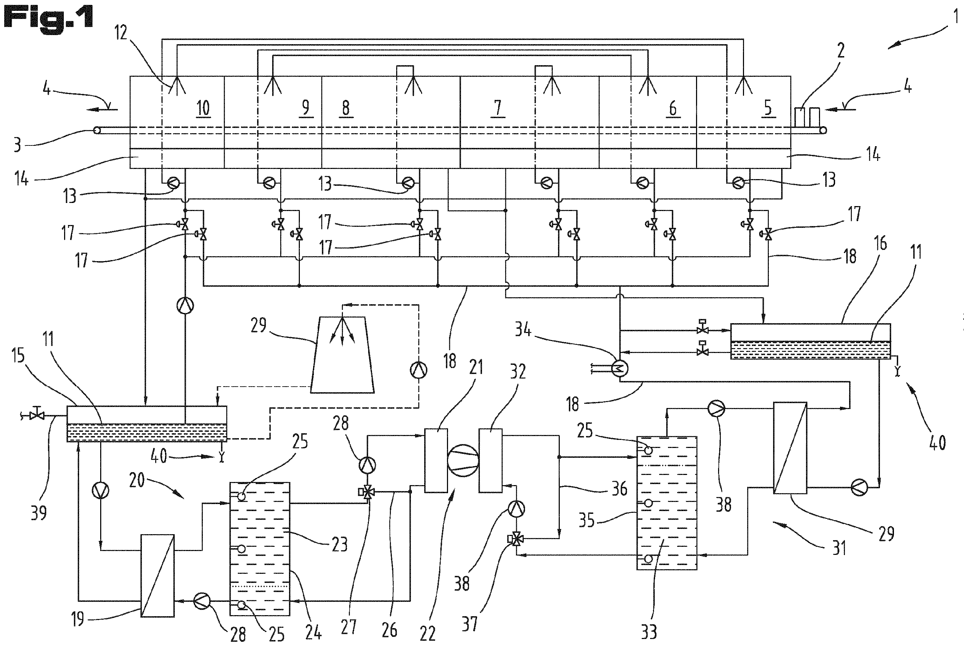

- Fig. 1: ein Fließschema einer Anlage bzw. ein Verfahrensschema für die Pasteurisierung von Lebensmitteln in Behältnissen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

In der Fig. 1 ist ein Ausführungsbeispiel einer Anlage 1 zum Pasteurisieren von in verschlossenen Behältnissen 2 abgefüllten Lebensmitteln schematisch dargestellt. Die in der Fig. 1 dargestellte Anlage 1 ist als sogenannter Tunnelpasteur ausgeführt, bei welchem die Behältnisse 2 mittels eines Fördermittels 3, beispielsweise ein Förderband in einer Transportrichtung 4 durch mehrere aufeinanderfolgende Zonen transportiert werden. Bei dem in der Fig. 1 dargestellten Ausführungsbespiel sind in Transportrichtung 4 zunächst zwei Anwärmzonen 5, 6, dann zwei Pasteurisierungszonen 7, 8 und schließlich zwei Abkühlzonen 9, 10 vorgesehen.

Je nach Bedarf bzw. Einsatzzweck einer Pasteurisierungsanlage können selbstverständlich auch mehr oder weniger Zonen, als im Ausführungsbeispiel gemäß der Fig. 1 vorhanden sein. Ebenfalls ist möglich, dass weitere Behandlungszonen vorgesehen sind. Zum Beispiel könnte nachfolgend auf die in Transportrichtung 4 am Ende angeordnete Abkühlzone 10 beispielsweise eine Zone zur Trocknung der Außenseite der Behältnisse 2 vorgesehen sein. Aus Gründen der Übersichtlichkeit sind in der Fig. 1 solche zusätzlichen Behandlungszonen nicht dargestellt.

Zur Behandlung bzw. Pasteurisierung der Lebensmittel kann vorgesehen sein, die Behältnisse 2 mit einer Prozessflüssigkeit 11 zu beaufschlagen. In dem Ausführungsbeispiel gemäß der Fig. 1 sind hierzu in jeder Zone 5, 6, 7, 8, 9, 10 eingangsseitig Berieselungsvorrichtungen 12 angeordnet, mittels welcher die Prozessflüssigkeit 11 auf bzw. über die Außenseite der verschlossenen Behältnisse 2 verteilt bzw. beaufschlagt werden kann. Die Berieselungsvorrichtungen 12 können zum Beispiel durch eine Mehrzahl an Sprühdüsen gebildet sein, welche in jeder Zone 5, 6, 7, 8, 9, 10 beispielsweise in einem oberen und/oder seitlichen Bereich angeordnet sein können. In die jeweilige Zone 5, 6, 7, 8, 9, 10 kann die Prozessflüssigkeit 11 über die Berieselungsvorrichtungen 12 mit jeweils unterschiedlichem bzw. für jede Zone eingestelltem Temperaturniveau eingeleitet werden, was nachfolgend noch näher erläutert wird. Die Prozessflüssigkeit 11 kann den Berieselungsvorrichtungen 12 der Zonen 5, 6, 7, 8, 9, 10 hierbei jeweils über eine Pumpe, insbesondere Umwälzpumpe 13 zugeführt werden.

Um ein möglichst schonendes Vorwärmen der Lebensmittel in den Behältnissen 2 zu ermöglichen kann zum Beispiel vorgesehen sein, dass die Prozessflüssigkeit 11 der Anwärmzone 5 mit einer Temperatur von ca. 35 °C, und der Anwärmzone 6 mit einer Temperatur von ca. 55 °C zugeführt wird. Zur Pasteurisierung der Lebensmittel in den Behältnissen 2 kann die Zufuhr der Prozessflüssigkeit 11 in die Pasteurisierungszonen 7, 8 bei einer Temperatur von beispielsweise 85 °C erfolgen, um die Behältnisse 2 bzw. die beinhalteten Lebensmittel auf eine effektive Pasteurisierungstemperatur aufzuheizen und für eine ausreichende Zeitdauer auf dieser Pasteurisierungstemperatur zu halten. Zum gezielten Abkühlen der Behältnisse 2 bzw. der Lebensmittel kann vorgesehen sein, die Prozessflüssigkeit 11 mit einer Temperatur von ca. 50 °C in die Abkühlzone 9, und mit einer Temperatur von etwa 30 °C in die Abkühlzone 10 einzuleiten.

Diese beispielhaft für jede Zone 5, 6, 7, 8, 9, 10 angegebenen Temperaturwerte der Prozessflüssigkeit 11 können natürlich bedarfsabhängig variiert werden. Dabei kann vor allem die Art bzw. Zusammensetzung der zu pasteurisierenden Lebensmittel eine wichtige Rolle spielen. Beispielsweise kann je nach Zusammensetzung der Lebensmittel eine höhere oder tiefere Pasteurisierungstemperatur als 85 °C erforderlich sein. Des Weiteren kann zum Beispiel insbesondere bei temperaturempfindlichen Lebensmitteln eine schnellere Abkühlung nach der Pasteurisierung, bzw. eine Abkühlung der Lebensmittel auf ein tieferes Temperaturniveau erforderlich sein. Dies trifft vor allem bei Lebensmitteln mit empfindlichen Inhaltsstoffen zu, beispielsweise bei zuckerhaltigen Lebensmitteln. In solchen Fällen kann den Abkühlzonen 9, 10 die Prozessflüssigkeit 11 mit einem tieferen Temperaturniveau als obenstehend angegeben, beispielsweise mit einer Temperatur von 45 °C für Abkühlzone 9 bzw. 25 °C für Abkühlzone 10 zugeführt werden.

Nach Durchrieseln einer jeweiligen Zone 5, 6, 7, 8, 9, 10 kann die Prozessflüssigkeit 11 in einem unteren Sammelbereich 14 der Zonen 5, 6, 7, 8, 9, 10 aufgefangen und zur weiteren Verwendung aus den Zonen 5, 6, 7, 8, 9, 10 abgeführt werden. Hierzu können einerseits die Eingangs bzw. Ansaugseiten der Umwälzpumpen 13 mit den Zonen 5, 6, 7, 8, 9, 10 bzw. deren Sammelbereiche 14 leitungsverbunden sein, um zumindest Teilmengen der Prozessflüssigkeit 11 aus den Sammelbereichen 14 unmittelbar wieder einer der Zonen 5, 6, 7, 8, 9, 10 zuzuführen. Wie im Ausführungsbeispiel gemäß der Fig. 1 dargestellt ist, kann es hierbei zweckmäßig sein, wenn die Umwälzpumpe 13, welche eingangsseitig mit dem Sammelbereich 14 der Anwärmzonen 5 leitungsverbunden ist, ausgangsseitig mit der Berieselungsvorrichtung 12 der Abkühlzone 10 leitungsverbunden ist. Dies kann primär deshalb zweckmäßig sein, da sich die Prozessflüssigkeit 11 in Anwärmzone 5 durch die Wärmeaufnahme der Behältnisse 2 bzw. Lebensmittel abkühlt, und nach Durchströmen der Anwärmzone 5 ein zum Abkühlen der Behältnisse 2 in Abkühlzone 10 geeignetes Temperaturniveau aufweist.

Aus denselben Gründen kann eine Zuführung der Prozessflüssigkeit 11 aus dem Sammelbereich 14 der Abkühlzone 10 zu der Berieselungsvorrichtung 12 der Anwärmzone 5 sinnvoll sein, wie dies auch im Ausführungsbeispiel der Pasteurisierungsanlage 1 in der Fig. 1 schematisch veranschaulicht ist. Des Weiteren kann analog auch eine wechselseitige Zuführung der Prozessflüssigkeit 11 von Anwärmzone 6 in Abkühlzone 9 und umgekehrt vorgesehen sein.

Wie im Ausführungsbeispiel in der Fig. 1 dargestellt, können die den Pasteurisierungszonen 7, 8 zugeordneten Umwälzpumpen 13 zur zumindest teilweisen Rückförderung der Prozessflüssigkeit 11 aus dem Sammelraum der Zone 7 respektive Zone 8 zu den Berieselungsvorrichtungen 12 der entsprechenden Zone 7 respektive Zone 8 vorgesehen sein. In anderen Worten ausgedrückt kann vorgesehen sein, dass zumindest eine Teilmenge der Prozessflüssigkeit 11 im Kreis um die Pasteurisierungszone 7 und um die Pasteurisierungszone 8 geführt wird.

Des Weiteren kann vorgesehen sein, dass wenigstens Teilmengen der in den Sammelbereichen 14 anfallenden Prozessflüssigkeit 11 anstatt wieder in eine Behandlungszone 5, 6, 7, 8, 9, 10 zurückgepumpt zu werden, Sammelbehältnissen zugeführt werden. Hierzu ist gemäß dem in der Fig. 1 dargestellten Ausführungsbeispiel einerseits ein Kältetank 15 angeordnet, welcher zur Sammlung von Prozessflüssigkeit 11 auf tiefen Temperaturniveau vorgesehen ist.

Dem Kältetank 15 kann insbesondere Prozessflüssigkeit 11 aus Sammelbereichen 14, in welchen die Prozessflüssigkeit 11 eine verhältnismäßig geringe Temperatur aufweist zugeführt werden. Im in der Fig. 1 dargestellten Ausführungsbeispiel ist der Kältetank 15 daher insbesondere mit den Sammelbereich 14 der Anwärmzone 5 und dem Sammelbereich 14 der Abkühlzone 10 leitungsverbunden.

Bei dem Ausführungsbeispiel gemäß Fig. 1 ist weiters ein Wärmetank 16 angeordnet, welcher zur Sammlung und Zwischenspeicherung von Prozessflüssigkeit mit hohem Temperaturniveau vorgesehen ist. Daher kann es sinnvoll sein, diesem Wärmetank 16 Prozessflüssigkeit 11 aus den Sammelbereichen 14 der Pasteurisierungszonen 7, 8 zuzuführen, wie dies auch in der Fig. 1 schematisch veranschaulicht ist.

Mittels der Umwälzpumpen 13 und eingangsseitig der Umwälzpumpen 13 angeordneter Dosiervorrichtungen 17 ist im in der Fig. 1 dargestellten Ausführungsbeispiel den Berieselungsvorrichtungen 12 der Zonen 5, 6, 7, 8, 9, 10 Prozessflüssigkeit 11 mit niedrigem Temperaturniveau aus dem Kältetank 15 zudosierbar. Des Weiteren ist den Berieselungsvorrichtungen 12 der Zonen 5, 6, 7, 8, 9, 10 auch mittels weiterer Dosiervorrichtungen 17 Prozessflüssigkeit 11 mit mindestens Pasteurisierungstemperatur oder höherer Temperatur aus einem Vorlauf 18 zudosierbar. Die Dosiervorrichtungen 17 können hierbei beispielsweise durch Durchflussregelventile gebildet sein. Dadurch kann jeder Behandlungszone 5, 6, 7, 8, 9, 10 Prozessflüssigkeit 11 mit gezielt festlegbarer bzw. einstellbarer Temperatur zugeführt werden.

Selbstverständlich sind hinsichtlich der Förderung der Prozessflüssigkeit 11 durch die Anlage 1 bzw. die jeweiligen Zonen 5, 6, 7, 8, 9, 10 auch andere, alternative Lösungen grundsätzlich möglich. Zum Beispiel kann je nach Einsatzzweck der Pasteurisierungsanlage 1 ein Zumischen von kalter Prozessflüssigkeit aus dem Kältetank 15 zumindest für einige Behandlungszonen erübrigt sein, sodass nicht jede der Umwälzpumpen 13 notwendigerweise eingangsseitig mit dem Kältetank 15 leitungsverbunden sein müssen. Ebenso kann vorgesehen sein, dass wenigstens einige der Umwälzpumpen 13 nicht mit dem Prozessflüssigkeit 11 mit mindestens Pasteurisierungstemperatur führenden Vorlauf 18 leitungsverbunden sind.

Wie weiters in der Fig. 1 schematisch dargestellt ist, ist der Kältetank 15 mit einer Seite eines Kühlungswärmetauscher 19 leitungsverbunden. Die andere Seite des Kühlungswärmetauschers 19 ist zur Übertragung von Kühlungsenergie auf die Prozessflüssigkeit 11 mit einem Kühlkreis 20 eines Kälteübertragungsmittels 21 einer Wärmepumpe 22 leitungsverbunden. Im Betrieb der Anlage beinhaltet der Kühlkreis 20 ein Kühlmedium 23, welches insbesondere im Wesentlichen durch Wasser gebildet sein kann. Gegebenenfalls kann dem Kühlmedium 23 bzw. Wasser ein Frostschutzmittel oder andere Zusatzstoffe beigemengt sein. Die Prozessflüssigkeit 11 und das Kühlmedium 23 werden stofflich getrennt durch den Kühlungswärmetauscher 19 geführt, bevorzugt im Gegenstromprinzip. Durch die Übertragung der im Kälteübertragungsmittel 21 bereitgestellten Kühlungsenergie an die Prozessflüssigkeit im Kühlungswärmetauscher 19 kann somit eine Teilmenge der Prozessflüssigkeit 11 aus dem Kältetank 15 entnommen, via den Kühlungswärmetauscher 19 abgekühlt und wieder in den Kältetank 15 zurückgeführt werden.

Wesentlich ist hierbei, dass der Kühlkreis 20 einen als hydraulische Weiche eingebundenen Kältepufferspeicher 24 umfasst, welcher in einem oberen Endbereich mit einem Eingang des Kälteübertragungsmittels 21 der Wärmepumpe 22 und in einem unteren Endbereich mit einem Ausgang des Kälteübertragungsmittels 21, sowie in einem oberen Endbereich mit einem Ausgang des Kühlungswärmetauschers 19 und in einem unteren Endbereich mit einem Eingang des Kühlungswärmetauschers 19 leitungsverbunden ist. Auf diese Weise ist ein Einleiten der in dem Kälteübertragungsmittel 21 erzeugten Kühlungsenergie via des durch das Kälteübertragungsmittel 21 geführte Kühlmedium 23 in einen unteren Endbereich des Kältepufferspeicher 24 und die Rückführung des Kühlmediums 23 aus einem oberen Endbereich des Kältepufferspeichers 24 in das Kälteübertragungsmittel 21 unabhängig von der Entnahme an Kühlmedium 23 aus dem Kältepufferspeicher 24 zur Zuführung in den Kühlungswärmetauscher 19 ermöglicht. Mit anderen Worten ausgedrückt ist durch den Kältepufferspeicher 24 ein Mittel zur Entkoppelung der Kühlungsleistungsentnahme in dem Kühlungswärmetauscher 19 und der im Kälteübertragungsmittel 21 generierten Kühlungsenergie geschaffen. Etwaige, überschüssige im Kälteübertragungsmittel 21 der Wärmepumpe 22 erzeugte Kühlungsenergie kann dabei zur späteren Verwendung bzw. Entnahme in dem Kältepufferspeicher 24 zwischengespeichert werden.

Hierbei kann es von Vorteil sein, wenn der Kältepufferspeicher 24 ein Speichervolumen zwischen 0,01 m³ und 3 m³ pro 1 kW Kühlleistung der Wärmepumpe 22 aufweist. Vorzugsweise weist der Kältepufferspeicher ein Speichervolumen zwischen 0,02 m³ und 1 m³ pro 1 kW Kühlleistung der Wärmepumpe auf. Des Weiteren kann es zweckmäßig sein, dass eine bauliche Höhe des Kältepufferspeichers 24 zwischen 0,2 m und 0,4 m pro 1 m³ Volumen des Kältepufferspeichers 24 beträgt. Im Falle eines zylindrisch ausgeführten Kältepufferspeichers kann das Verhältnis von Höhe zu Durchmesser beispielsweise im Bereich von 1 bis 3 zu 1 liegen. Durch eine derartige Ausgestaltung des Kältepufferspeichers 24 kann insbesondere eine ausreichende Temperaturschichtung im Kältepufferspeicher 24 aufrechterhalten werden, sodass der Kältepufferspeicher 24 in der Art eines Schichtspeichers betrieben werden kann. Warme Flüssigkeiten, beispielsweise warmes Wasser, haben eine geringere Dichte als die entsprechenden kalten Flüssigkeiten, sodass sich im Kältepufferspeicher 24 kaltes Kühlmedium 23 im unteren Endbereich sammelt.

Hierdurch ist es möglich, dass im Betrieb der Anlage 1 dem Kühlungswärmetauscher 19 verhältnismäßig kaltes Kühlmedium 23 aus dem unteren Endbereich des Kältepufferspeichers 24 zugeführt wird, und nach Durchtritt durch den Kühlungswärmetauscher 19 das hierdurch erwärmte Kühlmedium 23 in den oberen Endbereich des Kältepufferspeichers 24 zurückgeführt wird. Kälteübertragungsmittelseitig kann dem Kältepufferspeicher 24 kontinuierlich wiederum verhältnismäßig warmes Kühlmedium aus dem oberen Endbereich entnommen werden, über das Kälteübertragungsmittel 21 abgekühlt, und als verhältnismäßig kaltes Kühlmedium 23 wieder in den unteren Endbereich des Kältepufferspeichers 24 eingeleitet werden. Dadurch steht zur Abkühlung der Prozessflüssigkeit 11 in dem Kühlungswärmetauscher 19 selbst nach langanhaltendem Betrieb der Pasteurisierungsanlage 1 unter hohem Kühlleistungsbedarf lange Zeit ausreichend kaltes Kühlmedium 23 aus dem unteren Endbereich des Kältepufferspeichers 24 zur Verfügung. Bei geringer Kühlleistungsabnahme in der Anlage 1, beispielsweise bei einem Chargenwechsel der Behältnisse 2 bzw. der Lebensmittel und somit leeren Zonen 5, 6, 7, 8, 9, 10, kann der Kältepufferspeicher 24 mit Kühlungsenergie bzw. mit über das Kälteübertragungsmittel 21 abgekühltem Kühlmedium 23 beladen werden.

In seltenen Fällen kann auch eine Zuführung des Kühlmediums in den Kühlungswärmetauscher aus anderen Bereichen als dem unteren Endbereich des Kältepufferspeichers zweckmäßig sein, insbesondere wenn ein höheres Temperaturniveau des Kühlmediums zweckmäßig ist. Hierfür wären weitere Leitungsverbindungen zwischen Kältepufferspeicher und Kühlungswärmetauscher vorzusehen. Dies ist in der Fig. 1 aus Gründen der Übersichtlichkeit nicht dargestellt.

Zwecks automatisierter Steuerung bzw. Regelung der Bereitstellung von Kühlungsenergie durch den Kühlkreis 20 bzw. in dem Kältepufferspeicher 24 kann im Inneren des Kältepufferspeichers 24 wenigstens in dem unteren Endbereich, in einem mittleren Bereich und in einem oberen Endbereich jeweils zumindest ein Temperatursensor 25 zur Erfassung der Temperaturen des Kühlmediums 23 in den jeweiligen Bereichen des Kältepufferspeichers 24 angeordnet sein. Des Weiteren kann der Kühlkreis 20 zwischen dem Kälteübertragungsmittel 21 und dem Kältepufferspeicher 24 eine Bypassleitung 26 aufweisen, welcher wenigstens ein Durchflussregelvorrichtung 27 zugeordnet ist. In dem in der Fig. 1 dargestellten Ausführungsbeispiel ist die Durchflussregelvorrichtung 27 durch ein ansteuerbares Drei-Wege-Ventil gebildet, mittels welchem die Durchflussmengen des Kühlmediums 23 im Kreis um das Kälteübertragungsmittel 21 bzw. die Durchflussmengen in den Kältepufferspeicher 24 zu dessen Beschickung mit Kühlmedium 23 stufenlos regelbar sind.

Außerdem kann vorgesehen sein, dass im Kühlkreis 20 zur Zuführung des Kühlmediums 23 in den Kühlungswärmetauscher 19 aus dem Kältepufferspeicher 24 sowie zur Zuführung des Kühlmediums 23 in das Kälteübertragungsmittel 21 aus dem Kältepufferspeicher 24 jeweils eine durchflussregelbare Pumpe 28 angeordnet ist.

Die Temperatursensoren 25, die Durchflussregelvorrichtung 27, die Pumpen 28, sowie die Wärmepumpe 22 selbst, können hierbei mit einer in der Fig. 1 nicht dargestellten Steuerungsvorrichtung, beispielsweise einer sogenannten SPS-Steuerung datentechnisch bzw. elektrisch verbunden sein. Durch entsprechende Programmierung einer solchen SPS-Steuerung können die Durchflussregelvorrichtung 27, die Pumpen 28 und die Wärmepumpe 22, bzw. deren untergeordnete oder interne Steuerungen entsprechend den jeweiligen Erfordernissen automatisiert angesteuert werden.

So kann vorgesehen sein, dass eine jeweilig dem Kältepufferspeicher 24 zugeführte und aus dem Kältepufferspeicher 24 zur Zuführung in den Kühlungswärmetauscher 19 entnommene Menge an Kühlmedium 23 mittels der durchflussregelbaren Pumpen 28 an den jeweiligen Kühlbedarf und/oder ein erforderliches Temperaturniveau des Kühlmediums 23 angepasst wird. Hierbei kann zur Erzielung eines tieferen Temperaturniveaus des Kühlmediums 23 beispielsweise eine geringere Menge an Kühlmedium 23 über das Kälteübertragungsmittel 21 geführt werden. Durch Drosselung der Fördermenge der Pumpe 28, welche das Kühlmedium 23 zwischen Kälteübertragungsmittel 21 und dem Kältepufferspeicher 24 fördert, kann für das Kühlmedium 23 eine höhere Verweilzeit in dem Kälteübertragungsmittel 21 eingestellt werden. Dadurch kann das Kühlmedium mehr Kühlungsenergie im Kälteübertragungsmittel 21 aufnehmen, und wird dabei stärker abgekühlt bzw. auf ein tieferes Temperaturniveau gebracht.

Ein Bedarf an besonders kaltem Kühlmedium 23 kann zum Beispiel dann bestehen, wenn Behältnisse 2 bzw. die Lebensmittel in den Behältnissen 2 in einer entlang der Transportrichtung 4 am Ende angeordneten Abkühlzone 10 mittels der Prozessflüssigkeit 11 auf eine vorab festgelegte, tiefe Zieltemperatur abgekühlt werden sollen. Hierfür kann die Temperatur des Kühlmediums 23 in dem unteren Endbereich des Kältepufferspeichers 24 auf ein Temperaturniveau unterhalb dieser Zieltemperatur eingestellt werden.

Des Weiteren kann vorgesehen sein, bei Erfassung einer Temperatur des Kühlmediums 23 im unteren Endbereich des Kältepufferspeichers 24 oberhalb einer Temperatur der Prozessflüssigkeit 11 in dem Kältetank 15 und/oder oberhalb einer vorab festgelegten bzw. festlegbaren Schwelltemperatur, zumindest eine Teilmenge des Kühlmediums 23 via die Bypassleitung 26 nach Austritt aus dem Kälteübertragungsmittel 21 unmittelbar wieder in das Kälteübertragungsmittel 21 zurückgeführt wird. Zur Messung der Temperatur in dem Kältetank 15 ist hierzu natürlich ebenfalls ein Temperatursensor vorzusehen.

Es kann aber auch vorgesehen sein, dass das Kühlmedium 23 dem Kühlungswärmetauscher 19 aus dem unteren Endbereich des Kältepufferspeichers 24 erst dann zugeführt wird, wenn in dem unteren Endbereich des Kältepufferspeichers 24 eine Mindesttemperaturniveau des Kühlmediums 23 unterhalb einer vorab festgelegten bzw. festlegbaren Schwelltemperatur eingestellt wurde.

Grundsätzlich kann aufgrund der SPS-geregelten Wärmepumpe 22, Durchflussregelvorrichtung 27 und der Pumpen 28 in Verbindung mit dem als hydraulische Weiche eingebundenen, entsprechend ausgestalteten Kältepufferspeicher 24 ein unproblematischer, in energetischer Hinsicht, hocheffizienter Betrieb der Anlage 1 bzw. eine hocheffiziente und ökologisch sinnvolle Verfahrensführung bereitgestellt werden. Zur Abdeckung von Kühlungsleistungsspitzen kann als Sicherheitsreserve ein mit dem Kältetank 15 leitungsverbundenes Rückkühlmittel vorgesehen sein, welches zum Beispiel als Kühlturm 29 oder als Kaltwasserzuleitung 39 ausgebildet sein kann, wie dies auch in der Fig. 1 dargestellt ist. Wie aus der Fig. 1 ersichtlich ist, kann dem Kältetank 15 hierbei bei Bedarf Prozessflüssigkeit 11 entnommen, beispielsweise durch den Kühlturm 29 geführt, und anschließend wieder in den Kältetank 15 zurückgeführt werden, sodass die Prozessflüssigkeit 11 in dem Kältetank 15 bedarfsabhängig, insbesondere zur Abdeckung von Kühlungsleistungsspitzen zusätzlich mittels eines insbesondere als Kühlturm 29 oder Kaltwasserzuleitung 39 ausgebildeten Rückkühlmittel zusätzlich gekühlt werden kann. Zum Ausgleichen der gesamten Flüssigkeitsmenge in der Anlage 1 kann beispielsweise der Kältetank 15 und/oder der Wärmetank 16 einen Abfluss 40 aufweisen.

Wie in der Fig. 1 weiters dargestellt ist, der Wärmetank 16 mit einer Seite eines Heizungswärmetauscher 30 leitungsverbunden. Die andere Seite des Heizungswärmetauschers 30 ist zur Übertragung von Wärmeenergie mit einem Heizkreis 31 umfassend ein Wärmeübertragungsmittel 32 der Wärmepumpe 22 leitungsverbunden. Der Heizkreis 31 beinhaltet ein Heizmedium 33, welches wiederum im Wesentlichen durch Wasser gebildet sein kann. Gegebenenfalls kann dem Heizmedium 33 bzw. Wasser ein Frostschutzmittel, oder andere Zusatzstoffe beigemengt sein. Die Prozessflüssigkeit 11 und das Heizmedium 33 werden stofflich getrennt durch den Heizungswärmetauscher 30 geführt, bevorzugt im Gegenstromprinzip.

Der Ausgang des Heizungswärmetauscher 30 für die Prozessflüssigkeit 11, welcher in der Fig. 1 auf der rechten, oberen Seite des Heizungswärmetauscher 30 dargestellt ist, mündet in den bereits beschriebenen Vorlauf 18, aus welchem den Zonen 5, 6, 7, 8, 9, 10 über die Dosiervorrichtungen 17 bedarfsabhängig erhitzte Prozessflüssigkeit 11 beigemengt bzw. zugeführt werden kann. Dadurch ist ermöglicht, dass die im Zuge der Abkühlung des Kühlmediums 23 in dem Kälteübertragungsmittel 21 durch die Wärmepumpe 22 im Wärmeübertragungsmittel 32 generierte Wärmeenergie bzw. Abwärme zur bedarfsweisen Erhöhung der Temperatur der Prozessflüssigkeit 11 in dem Vorlauf 18 über einen Heizungswärmetauscher 30 benutzt wird.

Wie bereits beschrieben wird den Zonen, insbesondere den Pasteurisierungszonen 7, 8 über den Vorlauf 18 Prozessflüssigkeit 11 mit zumindest Pasteurisierungstemperatur zugeführt. Zur zusätzlichen Erhitzung der Prozessflüssigkeit 11 auf zumindest Pasteurisierungstemperatur oder eine höhere Temperatur im Vorlauf 18 kann in dem ausgangsseitig des Heizungswärmetauschers 30 angeordnetem Vorlauf 18 zur zusätzlichen Erhitzung der Prozessflüssigkeit 11 ein Heizmittel vorgesehen ist. Beispielsweise kann hierbei das Heizmittel durch einen mit Wasserdampf beaufschlagten Wärmetauscher 34 gebildet sein.

Zusätzlich kann vorgesehen sein, dem Vorlauf 18 Prozessflüssigkeit 11 aus dem Wärmetank 16 beizumengen, oder dem Wärmetank 16 aus dem Vorlauf 18 Prozessflüssigkeit 11 zuzuführen, wie dies schematisch in der Fig. 1 skizziert ist.

Auch im Heizkreis 31 ist wesentlich, dass einen als hydraulische Weiche eingebundenen Wärmepufferspeicher 35 umfasst, welcher an einem oberen Endbereich mit einem Ausgang des Wärmeübertragungsmittels 32 der Wärmepumpe 22 und in einem unteren Endbereich mit einem Eingang des Wärmeübertragungsmittels 32, sowie in einem oberen Endbereich mit einem Eingang des Heizungswärmetauschers 30 und in einem unteren Endbereich mit einem Ausgang des Heizungswärmetauschers 30 leitungsverbunden ist. Dadurch ist ein Einleiten der in dem Wärmeübertragungsmittel 32 erzeugten Wärmeenergie bzw. der Abwärme via des durch das Wärmeübertragungsmittel 32 geführten Heizmedium 33 in einen oberen Endbereich des Wärmepufferspeicher 35 und die Rückführung des Heizmedium 33 aus einem unteren Endbereich des Wärmepufferspeicher 35 in das Wärmeübertragungsmittel 32 unabhängig von der Entnahme an Heizmedium 33 aus dem Wärmepufferspeicher 35 zur Zuführung in den Heizungswärmetauschers 30 ermöglicht.

Dem Heizungswärmetauscher 30 kann vorteilhafterweise aus dem oberen Endbereich des Wärmepufferspeichers 35 verhältnismäßig heißes Heizmedium 33 zugeführt werden, und nach Durchtritt durch den Heizungswärmetauscher 30 und entsprechender Abgabe von Wärmeenergie in einen unteren Endbereich des Wärmepufferspeichers 35 zurückgeführt werden. Durch den Wärmepufferspeicher 35 ist also wiederum ein Mittel zur Entkoppelung der Wärmeleistungsentnahme in dem Heizungswärmetauschers 30 und der im Wärmeübertragungsmittel 32 generierten Wärmeenergie geschaffen. Etwaige, überschüssige im Wärmeübertragungsmittel 32 der Wärmepumpe 22 erzeugte Wärmeenergie kann dabei zur späteren Verwendung bzw. Entnahme in dem Wärmepufferspeicher 35 zwischengespeichert werden.

Vorteilhaft kann eine Ausgestaltung des Wärmepufferspeichers 35 sein, bei welcher er ein Speichervolumen zwischen 0,01 m³ und 3 m³ pro 1 kW Heizleistung der Wärmepumpe 22 aufweist. Vorzugsweise weist der Wärmepufferspeicher ein Speichervolumen zwischen 0,02 m³ und 1 m³ pro 1 kW Heizleistung der Wärmepumpe auf. Außerdem kann vorgesehen sein, dass eine bauliche Höhe des Wärmepufferspeichers 35 zwischen 0,2 m und 0,4 m pro 1 m³ Volumen des Wärmepufferspeichers 35 beträgt. Im Falle eines zylindrisch ausgeführten Wärmepufferspeichers kann das Verhältnis von Höhe zu Durchmesser beispielsweise im Bereich von 1 bis 3 zu 1 liegen. Dadurch sammelt sich wiederum heißes Heizmedium 33 in dem oberen Endbereich des Wärmepufferspeichers 35, und kann vorteilhafterweise dieses Heizmedium 33 mit höherer Temperatur als im unteren Endbereich des Wärmepufferspeichers 35, dem Heizungswärmetauscher 30 aus dem oberen Endbereich des Wärmepufferspeichers 35 zugeführt werden, wie dies auch klar aus der Fig. 1 ersichtlich ist.

Auch im Inneren des Wärmepufferspeichers 35 kann zur Ermöglichung einer automatisiert gesteuerten bzw. geregelten Bereitstellung von Wärmeenergie im Heizkreis 31 wenigstens in dem unteren Endbereich, in einem mittleren Bereich und in einem oberen Endbereich des Wärmepufferspeichers 35 jeweils zumindest ein Temperatursensor 25 angeordnet sein. Dadurch können die Temperaturen des Heizmediums 33 in den jeweiligen Bereichen im Inneren des Wärmepufferspeichers 35 erfasst werden.

Außerdem kann vorgesehen sein, dass der Heizkreis 31 zwischen dem Wärmeübertragungsmittel 32 und dem Wärmepufferspeicher 35 eine Bypassleitung 36 aufweist, welcher wenigstens ein Durchflussregelvorrichtung 37 zugeordnet ist. Die Durchflussregelvorrichtung 37 kann wiederum durch ein ansteuerbares Drei-Wege-Ventil gebildet sein, mittels welchem die Durchflussmengen des Heizmediums 33 im Kreis um das Wärmeübertragungsmittel 32 bzw. die Durchflussmengen des Heizmediums 33 zur Beschickung des Wärmepufferspeichers 35 stufenlos regelbar sind.

Schließlich kann auch im Heizkreis 31 vorgesehen sein, dass zur Zuführung des Heizmediums 33 in den Heizungswärmetauscher 30 aus dem Wärmepufferspeicher 35 sowie zur Zuführung des Heizmediums 33 in das Wärmeübertragungsmittel 32 aus dem Wärmepufferspeicher 35 jeweils eine durchflussregelbare Pumpe 38 angeordnet ist. Die Temperatursensoren 25, die Durchflussregelvorrichtung 37 und die Pumpen 38 können wiederum mit der bereits obenstehend angeführten SPS-Steuerungsvorrichtung datentechnisch bzw. elektrisch verbunden sein.

Die in der Fig. 1 schematisch dargestellte Wärmepumpe 22 kann grundsätzlich durch jeden geeigneten Wärmepumpentyp gebildet sein, also kann beispielsweise eine sogenannte Kompressionswärmepumpe, oder zum Beispiel eine Absorptionswärmepumpe verwendet werden. Die Übertragung der von der Wärmepumpe 22 generierten Kühlungsenergie auf das Kühlmedium 23 kann hierbei je nach Typ der verwendeten Wärmepumpe via bzw. in geeigneten, als Wärmetauscher ausgebildeten Kälteübertragungsmittel 21 erfolgen. Die Übertragung der von der Wärmepumpe 22 erzeugten Wärmeenergie auf das Heizmedium 33 kann je nach Typ der Wärmepumpe via bzw. in geeigneten, als Wärmetauscher ausgebildeten Wärmeübertragungsmittel 32 erfolgen. Bevorzugt wird eine Kompressionswärmepumpe eingesetzt, welche über Beaufschlagung eines Verdichters bzw. Kompressors mit elektrischer Energie betrieben werden kann. Im Falle der Verwendung einer Kompressionswärmepumpe 22 kann das Kälteübertragungsmittel 21durch den oder die Verdampfer der Wärmepumpe 22 gebildet, und kann das Wärmeübertragungsmittel 32 durch den oder die Kondensator(en) der Wärmepumpe 22 gebildet sein.

Durch die angegeben Merkmale und Maßnahmen ist ein energietechnisch effizienter Betrieb der Anlage 1 ermöglicht. Insbesondere kann durch Anordnung des Kältepufferspeichers 24 und des Wärmepufferspeichers 35 durch die Wärmepumpe 22 in hocheffizienter Art und Weise bereitgestellt und zwischengespeichert werden. Dadurch ist es möglich, die Wärmepumpe 22 sehr energieeffizient, weil unabhängig von Schwankungen im Kühlungsenergiebedarf und Wärmeenergiebedarf zu betreiben. Derartige Schwankungen kommen häufig bei Pasteurisierungsanlagen vor, beispielsweise bei zeitweiliger Stilllegung für Wartungen und Dergleichen, oder bei Stillstand der Anlage aufgrund eines Chargenwechsels. Insbesondere können bei Umstellung des Betriebes auf andere Chargen an Lebensmitteln und/oder Behältnissen auch andere Betriebsbedingungen, insbesondere andere Temperaturen der Prozessflüssigkeit 11 zur Zuleitung in die Zonen 5, 6, 7, 8, 9, 10 erforderlich sein. Zum Beispiel kann vorgesehen sein, dass in die Behältnisse 2 vor deren Eintritt in eine in Transportrichtung 4 am Anfang angeordnete Anwärmzone 5 ein Inertgas in flüssiger Form als Schutzgas für das im Behältnis 2 befindliche Lebensmittel zugesetzt wird. Dies kann zu einer Absenkung der Temperatur der Lebensmittel bzw. Behältnisse 2 kurz vor Eintritt in die Anlage 1 führen, sodass beispielsweise in solchen Fällen größere Heizleistungen erforderlich sind. Aufgrund des Kältepufferspeichers 24 und des Wärmepufferspeicher 35 sind Schwankungen im Kühlungsleistungsbedarf und Wärmeleistungsbedarf jedoch abgepuffert, und ist somit dennoch eine hocheffiziente Verfahrensführung ermöglicht.

Der Vollständigkeit halber sei abschließend noch erwähnt, dass sowohl der Kältepufferspeicher 24 als auch der Wärmepufferspeicher 35, sowie auch deren Zu- und Ableitungen zur Minimierung von Verlusten an Kühlungsenergie bzw. Wärmeenergie bevorzugt thermisch isoliert ausgeführt sind, bzw. mit entsprechend Isolierungsmaterial ummantelt sind. Selbiges kann auch für weitere Elemente des Kühlkreises 20 und des Heizkreises 31, insbesondere den Kühlungswärmetauscher 19 und den Heizungswärmetauscher 30 zweckmäßig sein.

Die Ausführungsbeispiele zeigen mögliche Ausführungsvarianten der Anlage bzw. des Verfahrens, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus der Anlage 1 Elemente teilweise unmaßstäblich und/oder vergrößert und/oder verkleinert dargestellt wurden.

**Bezugszeichenaufstellung**

| | | | |
|---|---|---|---|
| 1 | Anlage | 31 | Heizkreis |
| 2 | Behältnis | 32 | Wärmeübertragungsmittel |
| 3 | Fördermittel | 33 | Heizmedium |
| 4 | Transportrichtung | 34 | Wärmetauscher |
| 5 | Anwärmzone | 35 | Wärmepufferspeicher |
| 6 | Anwärmzone | 36 | Bypassleitung |
| 7 | Pasteurisierungszone | 37 | Durchflussregelvorrichtung |
| 8 | Pasteurisierungszone | 38 | Pumpe |
| 9 | Abkühlzone | 39 | Kaltwasserzuleitung |
| 10 | Abkühlzone | 40 | Abfluss |
| 11 | Prozessflüssigkeit | | |
| 12 | Berieselungsvorrichtung | | |
| 13 | Umwälzpumpe | | |
| 14 | Sammelbereich | | |
| 15 | Kältetank | | |
| 16 | Wärmetank | | |
| 17 | Dosiervorrichtung | | |
| 18 | Vorlauf | | |
| 19 | Kühlungswärmetauscher | | |
| 20 | Kühlkreis | | |
| 21 | Kälteübertragungsmittel | | |
| 22 | Wärmepumpe | | |
| 23 | Kühlmedium | | |
| 24 | Kältepufferspeicher | | |
| 25 | Temperatursensor | | |
| 26 | Bypassleitung | | |
| 27 | Durchflussregelvorrichtung | | |
| 28 | Pumpe | | |
| 29 | Kühlturm | | |
| 30 | Heizungswärmetauscher | | |

## Patentansprüche

1. Anlage (1) für die Pasteurisierung von in verschlossenen Behältnissen (2) abgefüllten Lebensmitteln durch Beaufschlagung der Behältnisse (2) mit einer Prozessflüssigkeit (11), umfassend
wenigstens eine Anwärmzone (5, 6), wenigstens eine Pasteurisierungszone (7, 8) und wenigstens eine Abkühlzone (9, 10), sowie ein Fördermittel (3) zum Transport der Behältnisse (2) in einer Transportrichtung (4) aufeinanderfolgend durch die Anwärmzone(n) (5, 6), die Pasteurisierungszone(n) (7, 8) und die Abkühlzone(n) (9, 10);
einen Kältetank (15) und einen Wärmetank (16) zum bedarfsweisen Ableiten und Sammeln der Prozessflüssigkeit (11) aus wenigstens einigen der Zonen (5, 6, 7, 8, 9, 10),
wobei der Kältetank (15) mit einer Seite eines Kühlungswärmetauschers (19) leitungsverbunden ist, dessen andere Seite zur Übertragung von Kühlungsenergie mit einem Kühlkreis (20) umfassend ein Kälteübertragungsmittel (21) einer Wärmepumpe (22) leitungsverbunden ist,
und wobei der Wärmetank (16) mit einer Seite eines Heizungswärmetauschers (30) leitungsverbunden ist, dessen andere Seite zur Übertragung von Wärmeenergie mit einem Heizkreis (31) umfassend ein Wärmeübertragungsmittel (32) der Wärmepumpe (22) leitungsverbunden ist;
**dadurch gekennzeichnet, dass**
der Kühlkreis (20) einen als hydraulische Weiche eingebundenen Kältepufferspeicher (24) umfasst, welcher in einem oberen Endbereich mit einem Eingang des Kälteübertragungsmittels (21) der Wärmepumpe (22) und in einem unteren Endbereich mit einem Ausgang des Kälteübertragungsmittels (21), sowie in einem oberen Endbereich mit einem Ausgang des Kühlungswärmetauschers (19) und in einem unteren Endbereich mit einem Eingang des Kühlungswärmetauschers (19) leitungsverbunden ist,
und der Heizkreis (31) einen als hydraulische Weiche eingebundenen Wärmepufferspeicher (35) umfasst, welcher an einem oberen Endbereich mit einem Ausgang des Wärmeübertragungsmittels (32) der Wärmepumpe (22) und in einem unteren Endbereich mit einem Eingang des Wärmeübertragungsmittels (32), sowie in einem oberen Endbereich mit einem Eingang des Heizungswärmetauschers (30) und in einem unteren Endbereich mit einem Ausgang des Heizungswärmetauschers (30) leitungsverbunden ist,
wobei zur Abdeckung von Kühlungsleistungsspitzen ein mit dem Kältetank (15) leitungsverbundenes Rückkühlmittel vorgesehen ist
welches Rückkühlmittel durch einen Kühlturm (29) gebildet ist.

2. Anlage nach Anspruch 1, **dadurch gekennzeichnet, dass** in einem ausgangsseitig des Heizungswärmetauschers (30) angeordnetem Vorlauf (18) zur zusätzlichen Erhitzung der Prozessflüssigkeit (11) ein Heizmittel vorgesehen ist.

3. Anlage nach Anspruch 2, **dadurch gekennzeichnet, dass** das Heizmittel durch einen mit Wasserdampf beaufschlagten Wärmetauscher (34) gebildet ist.

4. Anlage nach einem oder mehreren der vorhergehenden Ansprüche, **dadurch gekennzeichnet, dass** der Kältepufferspeicher (24) ein Speichervolumen zwischen 0,01 m³ und 3 m³ pro 1 kW Kühlleistung der Wärmepumpe (22) aufweist.

5. Anlage nach Anspruch 4, **dadurch gekennzeichnet, dass** eine bauliche Höhe des Kältepufferspeichers (24) zwischen 0,2 m und 0,4 m pro 1 m³ Volumen des Kältepufferspeichers (24) beträgt.

6. Anlage nach Anspruch 5, **dadurch gekennzeichnet, dass** im Inneren des Kältepufferspeichers (24) wenigstens in dem unteren Endbereich, in einem mittleren Bereich und in einem oberen Endbereich jeweils zumindest ein Temperatursensor (25) angeordnet ist.

7. Anlage nach einem oder mehreren der vorhergehenden Ansprüche, **dadurch gekennzeichnet, dass** der Wärmepufferspeicher (35) ein Speichervolumen zwischen 0,01 m³ und 3 m³ pro 1 kW Heizleistung der Wärmepumpe (22) aufweist.

8. Anlage nach Anspruch 7, **dadurch gekennzeichnet, dass** eine bauliche Höhe des Wärmepufferspeichers (35) zwischen 0,2 m und 0,4 m pro 1 m³ Volumen des Wärmepufferspeichers (35) beträgt.

9. Anlage nach Anspruch 8, **dadurch gekennzeichnet, dass** im Inneren des Wärmepufferspeichers (35) wenigstens in dem unteren Endbereich, in einem mittleren Bereich und in einem oberen Endbereich jeweils zumindest ein Temperatursensor (25) angeordnet ist.

10. Anlage nach einem oder mehreren der vorhergehenden Ansprüche, **dadurch gekennzeichnet, dass** der Kühlkreis (20) zwischen dem Kälteübertragungsmittel (21) und dem Kältepufferspeicher (24) eine Bypassleitung (26) aufweist, welcher wenigstens ein Durchflussregelvorrichtung (27) zugeordnet ist.

11. Anlage nach einem oder mehreren der vorhergehenden Ansprüche, **dadurch gekennzeichnet, dass** der Heizkreis (31) zwischen dem Wärmeübertragungsmittel (32) und dem Wärmepufferspeicher (35) eine Bypassleitung (36) aufweist, welcher wenigstens ein Durchflussregelvorrichtung (37) zugeordnet ist.

12. Anlage nach einem oder mehreren der vorhergehenden Ansprüche, **dadurch gekennzeichnet, dass** im Kühlkreis (20) zur Zuführung eines Kühlmediums (23) in den Kühlungswärmetauscher (19) aus dem Kältepufferspeicher (24) sowie zur Zuführung des Kühlmediums (23) in das Kälteübertragungsmittel (21) aus dem Kältepufferspeicher (24) jeweils eine durchflussregelbare Pumpe (28) angeordnet ist.

13. Anlage nach einem oder mehreren der vorhergehenden Ansprüche, **dadurch gekennzeichnet, dass** im Heizkreis (31) zur Zuführung eines Heizmediums (33) in den Heizungswärmetauscher (30) aus dem Wärmepufferspeicher (35) sowie zur Zuführung des Heizmediums (33) in das Wärmeübertragungsmittel (32) aus dem Wärmepufferspeicher (35) jeweils eine durchflussregelbare Pumpe (38) angeordnet ist.

14. Verfahren für die Pasteurisierung von in verschlossenen Behältnissen (2) abgefüllten Lebensmitteln, insbesondere mittels einer gemäß einem oder mehreren der Ansprüche 1 bis 13 ausgebildeten Anlage (1), umfassend, den Transport der Behältnisse (2) mittels eines Fördermittels (3) in einer Transportrichtung (4) aufeinanderfolgend durch wenigstens eine Aufwärmzone (5, 6), wenigstens eine Pasteurisierungszone (7, 8) und wenigstens eine Abkühlzone (9, 10),
Beaufschlagung der Behältnisse (2) in den jeweiligen Zonen (5, 6, 7, 8, 9, 10) mit einer geeignet temperierten Prozessflüssigkeit (11),
wobei einer jeweiligen Zone (5, 6, 7, 8, 9, 10) Prozessflüssigkeit (11) wenigstens teilweise aus einer anderen Zone (5, 6, 7, 8, 9, 10), und/oder aus derselben Zone (5, 6, 7, 8, 9, 10) und/oder aus einem Kältetank (15) und/oder über einen Vorlauf (18) zugeführt wird,
und wobei eine Teilmenge der Prozessflüssigkeit (11) aus dem Kältetank (15) entnommen, via einen Kühlungswärmetauscher (19) abgekühlt und wieder in den Kältetank (15) zurückgeführt wird, wobei an den Kühlungswärmetauscher (19) von einem Kühlkreis (20) umfassend ein Kälteübertragungsmittel (21) einer Wärmepumpe (22) Kühlungsenergie übertragen wird, und die dabei in einem Heizkreis (31) umfassend ein Wärmeübertragungsmittel (32) der Wärmepumpe (22) erzeugte Wärmeenergie zur bedarfsweisen Erhöhung der Temperatur der Prozessflüssigkeit (11) in dem Vorlauf (18) über einen Heizungswärmetauscher (30) benutzt wird
**dadurch gekennzeichnet, dass**
die in dem Kälteübertragungsmittel (21) erzeugte Kühlungsenergie via ein durch das Kälteübertragungsmittel (21) geführtes und dabei abgekühltes Kühlmedium (23) in einen unteren Endbereich eines als hydraulische Weiche in den Kühlkreis (20) eingebundenen Kältepufferspeicher (24) eingeleitet, und Kühlmedium (23) aus einem oberen Endbereich des Kältepufferspeichers (24) in das Kälteübertragungsmittel (21) zurückgeführt wird,
und die im Wärmeübertragungsmittel (32) erzeugte Wärmeenergie via ein durch das Wärmeübertragungsmittel (32) geführtes und dabei erhitztes Heizmedium (33) in einen oberen Endbereich eines als hydraulische Weiche in dem Heizkreis (31) eingebundenen Wärmepufferspeicher (35) eingeleitet, und Heizmedium (33) aus einem oberen Endbereich des Wärmepufferspeichers (35) in das Wärmeübertragungsmittel (32) zurückgeführt wird,
wobei die Prozessflüssigkeit (11) in dem Kältetank (15) bedarfsabhängig mittels eines als Kühlturm (29) ausgebildeten Rückkühlmittel zusätzlich gekühlt wird.

15. Verfahren nach Anspruch 14, **dadurch gekennzeichnet, dass** das Kühlmedium (23) dem Kühlungswärmetauscher (19) aus dem unteren Endbereich des Kältepufferspeichers (24) zugeführt wird, und nach Durchtritt durch den Kühlungswärmetauscher (19) in den oberen Endbereich des Kältepufferspeichers (24) zurückgeführt wird.

16. Verfahren nach Anspruch 14 oder 15, **dadurch gekennzeichnet, dass** das Heizmedium dem Heizungswärmetauscher (30) aus einem oberen Endbereich des Wärmepufferspeichers (35) zugeführt wird, und nach Durchtritt durch den Heizungswärmetauscher (30) in einen unteren Endbereich des Wärmepufferspeichers (35) zurückgeführt wird.

17. Verfahren nach einem oder mehreren der Ansprüche 14 bis 16, **dadurch gekennzeichnet, dass** die Temperaturen des Kühlmediums (23) im Kältepufferspeicher (24) und die Temperaturen des Heizmediums im Wärmepufferspeicher (35) mittels jeweils zumindest in einem unteren Endbereich, in einem mittleren Bereich und in einem oberen Endbereich des Kältepufferspeichers (24) und des Wärmepufferspeichers (35) angeordneter Temperatursensoren (25) erfasst werden.

18. Verfahren nach einem oder mehreren der Ansprüche 14 bis 17, **dadurch gekennzeichnet, dass** eine jeweilig dem Kältepufferspeicher (24) zugeführte und aus dem Kältepufferspeicher (24) zur Zuführung in den Kühlungswärmetauscher (19) entnommene Menge an Kühlmedium (23) mittels durchflussregelbarer Pumpen (28) an den jeweiligen Kühlbedarf und/oder ein erforderliches Temperaturniveau des Kühlmediums (23) angepasst wird.

19. Verfahren nach einem der Ansprüche 17 oder 18, **dadurch gekennzeichnet, dass** die Behältnisse (2) in einer entlang der Transportrichtung (4) am Ende angeordneten Abkühlzone (10) mittels der Prozessflüssigkeit (11) auf eine vorab festgelegte Zieltemperatur abgekühlt werden, und die Temperatur des Kühlmediums (23) in dem unteren Endbereich des Kältepufferspeichers (24) auf ein Temperaturniveau unterhalb dieser Zieltemperatur eingestellt wird.

20. Verfahren nach einem oder mehreren der Ansprüche 17 bis 19, **dadurch gekennzeichnet, dass** bei Erfassung einer Temperatur des Kühlmediums (23) im unteren Endbereich des Kältepufferspeichers (24) oberhalb einer Temperatur der Prozessflüssigkeit (11) in dem Kältetank (15) und/oder oberhalb einer vorab festlegbaren Schwelltemperatur, zumindest eine Teilmenge des Kühlmediums (23) via eine Bypassleitung (26) nach Austritt aus dem Kälteübertragungsmittel (21) unmittelbar wieder in das Kälteübertragungsmittel (21) zurückgeführt wird.

21. Verfahren nach einem oder mehreren der Ansprüche 17 bis 20, **dadurch gekennzeichnet, dass** das Kühlmedium (23) dem Kühlungswärmetauscher (19) aus dem unteren Endbereich des Kältepufferspeichers (24) erst dann zugeführt wird, wenn in dem unteren Endbereich des Kältepufferspeichers (24) eine Mindesttemperaturniveau des Kühlmediums (23) unterhalb einer vorab festlegbaren Schwelltemperatur eingestellt wurde.

22. Verfahren nach einem oder mehreren der Ansprüche 14 bis 21, **dadurch gekennzeichnet, dass** in die Behältnisse (2) vor deren Eintritt in eine in Transportrichtung (4) am Anfang angeordnete Anwärmzone (5) ein Inertgas in flüssiger Form zugesetzt wird.

## Claims

1. A system (1) for pasteurizing foods packed in closed containers (2) by supplying the containers (2) with a processing liquid (11), comprising
at least one heating zone (5, 6), at least one pasteurizing zone (7, 8), and at least one cooling zone (9, 10), and a conveying means (3) for transporting the containers (2) in a transport direction (4) through the heating zone(s) (5, 6), the pasteurizing zone(s) (7, 8), and the cooling zone(s) (9, 10) in succession;
a cold tank (15) and a heat tank (16) for draining and collecting the processing liquid (11) from at least some of the zones (5, 6, 7, 8, 9, 10) as required,
wherein the cold tank (15) is line-connected to one side of a cooling heat exchanger (19), the other side of which is line-connected to a cooling circuit (20) comprising a cold transfer means (21) of a heat pump (22) for the purpose of transferring cooling energy, and wherein the heat tank (16) is line-connected to one side of a heating heat exchanger (30), the other side of which is line-connected to a heating circuit (31) comprising a heat transfer means (32) of the heat pump (22) for the purpose of transferring heat energy;
**characterized in that**
the cooling circuit (20) comprises a cold buffer store (24) integrated as a hydraulic switch, said cold buffer store (24) being line-connected to an inlet of the cold transfer means (21) of the heat pump (22) in an upper end region, and being line-connected to an outlet of the cold transfer means (21) in a lower end region, and also to an outlet of the cooling heat exchanger (19) in an upper end region, and to an inlet of the cooling heat exchanger (19) in a lower end region,
and the heating circuit (31) comprises a heat buffer store (35) integrated as a hydraulic switch, said heat buffer store (35) being line-connected to an outlet of the heat transfer means (32) of the heat pump (22) in an upper end region, and being line-connected to an inlet of the heat transfer means (32) in a lower end region, and also to an inlet of the heating heat exchanger (30) in an upper end region, and to an outlet of the heating heat exchanger (30) in a lower end region,
wherein a recooling means line-connected to the cold tank (15) is provided to cover cooling performance peaks,
which recooling means is formed by a cooling tower (29).

2. The system according to claim 1, **characterized in that** a heating means is provided in a supply line (18) arranged on the outlet side of the heating heat exchanger (30) to provide additional heating for the processing liquid (11).

3. The system according to claim 2, **characterized in that** the heating means is formed by a heat exchanger (34) supplied with steam.

4. The system according to one or more of the preceding claims, **characterized in that** the cold buffer store (24) has a storage volume of between 0.01 m3 and 3 m3 per 1 kW cooling capacity of the heat pump (22).

5. The system according to claim 4, **characterized in that** a construction height of the cold buffer store (24) is between 0.2 m and 0.4 m per 1 m3 volume of the cold buffer store (24).

6. The system according to claim 5, **characterized in that** at least one temperature sensor (25) each is arranged inside the cold buffer store (24), at least in the lower end region, in a middle region, and in an upper end region respectively.

7. The system according to one or more of the preceding claims, **characterized in that** the heat buffer store (35) has a storage volume of between 0.01 m3 and 3 m3 per 1 kW heating capacity of the heat pump (22).

8. The system according to claim 7, **characterized in that** a construction height of the heat buffer store (35) is between 0.2 m and 0.4 m per 1 m3 volume of the heat buffer store (35).

9. The system according to claim 8, **characterized in that** at least one temperature sensor (25) each is arranged inside the heat buffer store (35), at least in the lower end region, in a middle region, and in an upper end region respectively.

10. The system according to one or more of the preceding claims, **characterized in that** the cooling circuit (20) comprises a bypass line (26) between the cold transfer means (21) and the cold buffer store (24), to which bypass line (26) at least one flow adjustment device (27) is assigned.

11. The system according to one or more of the preceding claims, **characterized in that** the heating circuit (31) comprises a bypass line (36) between the heat transfer means (32) and the heat buffer store (35), to which bypass line (26) at least one flow adjustment device (37) is assigned.

12. The system according to one or more of the preceding claims, **characterized in that** one pump (28) with adjustable flow each is arranged in the cooling circuit (20), intended to supply a cooling medium (23) to the cooling heat exchanger (19) from the cold buffer store (24), and to supply the cooling medium (23) to the cold transfer means (21) from the cold buffer store (24), respectively.

13. The system according to one or more of the preceding claims, **characterized in that** one pump (38) with adjustable flow each is arranged in the heating circuit (31), intended to supply a heating medium (33) to the heating heat exchanger (30) from the heat buffer store (35), and to supply the heating medium (33) to the heat transfer means (32) from the heat buffer store (35), respectively.

14. A method for pasteurizing foods packed in closed containers (2), especially by means of a system (1) designed according to one of multiple of claims 1 to 13, comprising transporting the containers (2) by means of a conveying means (3) in a transport direction (4) through at least one heating zone (5, 6), at least one pasteurizing zone (7, 8), and at least one cooling zone (9, 10) in succession,
supplying the containers (2) in the respective zones (5, 6, 7, 8, 9, 10) with an appropriately tempered processing liquid (11),
wherein said processing liquid (11) is supplied to a respective zone (5, 6, 7, 8, 9, 10) at least partially from another zone (5, 6, 7, 8, 9, 10), and/or from the same zone (5, 6, 7, 8, 9, 10), and/or from a cold tank (15) and/or via a supply line (18),
and wherein a partial amount of the processing liquid (11) is taken from the cold tank (15), cooled via a cooling heat exchanger (19) and returned to the cold tank (15),
wherein cooling energy is transferred to the cooling heat exchanger (19) from a cooling circuit (20) comprising a cold transfer means (21) of a heat pump (22),
and the heat energy generated thereby in a heating circuit (31) comprising a heat transfer means (32) of the heat pump (22) is used to increase the temperature of the processing liquid (11) in the supply line (18) by means of a heating heat exchanger (30) as required,
**characterized in that**
the cooling energy generated in the cold transfer means (21) is introduced into a lower end region of a cold buffer store (24) integrated as a hydraulic switch in the cooling circuit (20) via a cooling medium (23) passed through the cold transfer means (21) and cooled in this process, and cooling medium (23) is returned from an upper end region of the cold buffer store (24) to the cold transfer means (21),
and the heat energy generated in the heat transfer means (32) is introduced into an upper end region of a heat buffer store (35) integrated as a hydraulic switch in the heating circuit (31) via a heating medium (33) passed through the heat transfer means (32) and heated in this process, and heating medium (33) is returned from an upper end region of the heat buffer store (35) to the heat transfer means (32),
wherein the process liquid (11) in the cold tank (15) is additionally cooled as required by means of a cooling tower (29).

15. The method according to claim 14, **characterized in that** the cooling medium (23) is supplied to the cooling heat exchanger (19) from the lower end region of the cold buffer store (24) and returned to the upper end region of the cold buffer store (24) after passing through the cooling heat exchanger (19).

16. The method according to claim 14 or 15, **characterized in that** the heating means is supplied to the heating heat exchanger (30) from an upper end region of the heat buffer store (35) and returned to a lower end region of the heat buffer store (35) after passing through the heating heat exchanger (30).

17. The method according to one or more of claims 14 to 16, **characterized in that** the temperatures of the cooling medium (23) in the cold buffer store (24) and the temperatures of the heating medium in the heat buffer store (35) are acquired by temperature sensors (25) arranged at least in a lower end region, in a middle region, and in an upper end region of the cold buffer store (24) and the heat buffer store (35) respectively.

18. The method according to one or more of claims 14 to 17, **characterized in that** a respective quantity of cooling medium (23) supplied to the cold buffer store (24) and taken from the cold buffer store (24) to supply the cooling heat exchanger (19) is adjusted to the respective cooling demand and/or a necessary temperature level of the cooling medium (23) by means of pumps (28) with adjustable flow.

19. The method according to one of claims 17 or 18, **characterized in that** the containers (2) in a cooling zone (10) arranged at the end along the transport direction (4) are cooled to a predefined target temperature by means of the processing liquid (11), and the temperature of the cooling medium (23) in the lower end region of the cold buffer store (24) is adjusted to a temperature level below this target temperature.

20. The method according to one or more of claims 17 to 19, **characterized in that** at least a partial amount of the cooling medium (23) is returned immediately to the cold transfer means (21) via a bypass line (26) after being discharged from the cold transfer means (21) when a temperature of the cooling medium (23) in the lower end region of the cold buffer store (24) is acquired as being above a temperature of the processing liquid (11) in the cold tank (15) and/or above a threshold temperature which can be predefined.

21. The method according to one or more of claims 17 to 20, **characterized in that** the cooling medium (23) is only supplied to the cooling heat exchanger (19) from the lower end region of the cold buffer store (24) if a minimum temperature level of the cooling medium (23) in the lower end region of the cold buffer store (24) has been set below a threshold temperature which can be predefined.

22. The method according to one or more of claims 14 to 21, **characterized in that** an inert gas in liquid form is added to the containers (2) before these enter a heating zone (5) arranged at the start in the direction of transport (4).

## Revendications

1. Installation (1) pour la pasteurisation d'aliments conditionnés dans des récipients fermés (2) par l'alimentation des récipients (2) avec un liquide de process (11), comprenant
au moins une zone de chauffage (5, 6), au moins une zone de pasteurisation (7, 8) et au moins une zone de refroidissement (9, 10) ainsi qu'au moins un moyen de convoyage (3) pour le transport des récipients (2) dans une direction de transport (4) successivement à travers la ou les zones de chauffage (5, 6), la ou les zones de pasteurisation (7, 8) et la ou les zones de refroidissement (9, 10) ;
un réservoir de froid (15) et un réservoir de chaleur (16) pour l'évacuation et la collecte, si nécessaire, du liquide de process (11) hors d'au moins certaines des zones (5, 6, 7, 8, 9, 10),
dans laquelle le réservoir de froid (15) est relié par une conduite avec un côté d'un échangeur thermique de refroidissement (19), dont l'autre côté est relié par une conduite, pour la transmission d'une énergie de refroidissement, avec un circuit de refroidissement (20) comprenant un moyen de transmission de froid (21) d'une pompe à chaleur (22),
et dans laquelle le réservoir de chaleur (16) est relié par une conduite avec un côté d'un échangeur thermique de chauffage (30), dont l'autre côté est relié par une conduite, pour la transmission d'une énergie de chauffage, avec un circuit de chauffage (31) comprenant un moyen de transmission de chaleur (32) de la pompe à chaleur (22) ; **caractérisée en ce que**
le circuit de refroidissement (20) comprend un réservoir tampon de froid (24), intégré en tant que séparateur hydraulique, qui, dans une partie d'extrémité supérieure, est relié par une conduite avec une entrée du moyen de transmission de froid (21) de la pompe à chaleur (22) et, dans une partie d'extrémité inférieure, avec une sortie du moyen de transmission de froid (21), ainsi que, dans une partie d'extrémité supérieure, avec une sortie de l'échangeur thermique de refroidissement (19) et, dans une partie d'extrémité inférieure, avec une entrée de l'échangeur thermique de refroidissement (19),
et le circuit de chauffage (31) comprend un réservoir tampon de chaleur (35), intégré en tant que séparateur hydraulique, qui, dans une partie d'extrémité supérieure, est relié par une conduite avec une sortie du moyen de transmission de chaleur (32) de la pompe à chaleur (22) et, dans une partie d'extrémité inférieure, avec une entrée du moyen de transmission de chaleur (32), ainsi que, dans une partie d'extrémité supérieure, avec une entrée de l'échangeur thermique de chauffage (30) et, dans une partie d'extrémité inférieure, avec une sortie de l'échangeur thermique de chauffage (30),
dans laquelle, pour le recouvrement de pointes de puissance de refroidissement, un moyen de refroidissement de retour, relié par une conduite avec le réservoir de froid (15), est prévu,
ce moyen de refroidissement de retour étant constitué d'une tour de refroidissement (29).

2. Installation selon la revendication 1, **caractérisée en ce que**, dans une conduite aller (18) disposée côté sortie de l'échangeur thermique de chauffage (30), un moyen de chauffage est prévu pour le chauffage supplémentaire du liquide de process (11).

3. Installation selon la revendication 2, **caractérisée en ce que** le moyen de chauffage est constitué d'un échangeur thermique (34) alimenté en vapeur d'eau.

4. Installation selon l'une ou plusieurs des revendications précédentes, **caractérisée en ce que** le réservoir tampon de froid (24) présente un volume entre 0,01 m³ et 3 m³ pour 1 kW de puissance de refroidissement de la pompe à chaleur (22).

5. Installation selon la revendication 4, **caractérisée en ce qu'**une hauteur de construction du réservoir tampon de froid (24) est entre 0,2 m et 0,4 m pour 1 m³ de volume du réservoir tampon de froid (24).

6. Installation selon la revendication 5, **caractérisée en ce qu'**à l'intérieur du réservoir tampon de froid (24), au moins un capteur de température (25) est disposé respectivement au moins dans la partie d'extrémité inférieure, dans une partie centrale et dans une partie d'extrémité supérieure.

7. Installation selon l'une ou plusieurs des revendications précédentes, **caractérisée en ce que** le réservoir tampon de chaleur (35) présente un volume entre 0,01 m³ et 3 m³ pour 1 kW de puissance de chauffage de la pompe à chaleur (22).

8. Installation selon la revendication 7, **caractérisée en ce qu'**une hauteur de construction du réservoir tampon de chaleur (35) est entre 0,2 m et 0,4 m pour 1 m³ de volume du réservoir tampon de chaleur (35).

9. Installation selon la revendication 8, **caractérisée en ce qu'**à l'intérieur du réservoir tampon de chaleur (35), au moins un capteur de température (25) est disposé respectivement au moins dans la partie d'extrémité inférieure, dans une partie centrale et dans une partie d'extrémité supérieure.

10. Installation selon l'une ou plusieurs des revendications précédentes, **caractérisée en ce que** le circuit de refroidissement (20) comprend, entre le moyen de transmission de froid (21) et le réservoir tampon de froid (24), une conduite de dérivation (26), à laquelle correspond au moins un dispositif de régulation du débit (27).

11. Installation selon l'une ou plusieurs des revendications précédentes, **caractérisée en ce que** le circuit de chauffage (31) comprend, entre le moyen de transmission de chaleur (32) et le réservoir tampon de chaleur (35), une conduite de dérivation (36), à laquelle correspond au moins un dispositif de régulation du débit (37).

12. Installation selon l'une ou plusieurs des revendications précédentes, **caractérisée en ce que**, dans le circuit de refroidissement (20), pour l'introduction d'un milieu de refroidissement (23) dans l'échangeur thermique de refroidissement (19) à partir du réservoir tampon de froid (24) ainsi que pour l'introduction du milieu de refroidissement (23) dans le moyen de transmission de froid (21) à partir du réservoir tampon de froid (24), est disposée respectivement une pompe (28) à débit réglable.

13. Installation selon l'une ou plusieurs des revendications précédentes, **caractérisée en ce que**, dans le circuit de chauffage (31), pour l'introduction d'un milieu de chauffage (33) dans l'échangeur thermique de chauffage (30) à partir du réservoir tampon de chaleur (35) ainsi que pour l'introduction du milieu de chauffage (33) dans le moyen de transmission de chaleur (32) à partir du réservoir tampon de chaleur (35), est disposée respectivement une pompe (38) à débit réglable.

14. Procédé pour la pasteurisation d'aliments conditionnés dans des récipients fermés (2), plus particulièrement au moyen d'une installation (1) conçue selon l'une ou plusieurs des revendications 1 à 13, comprenant
le transport des récipients (2) au moyen d'un moyen de convoyage (3) dans une direction de transport (4) successivement à travers au moins une zone de chauffage (5, 6), au moins une zone de pasteurisation (7, 8) et au moins une zone de refroidissement (9, 10),
alimentation des récipients (2) dans les zones respectives (5, 6, 7, 8, 9, 10) avec un liquide de process tempéré (11),
dans laquelle, dans une zone respective (5, 6, 7, 8, 9, 10), un liquide de process (11) est introduit au moins partiellement à partir d'une autre zone (5, 6, 7, 8, 9, 10) et/ou à partir de la même zone (5, 6, 7, 8, 9, 10) et/ou à partir d'un réservoir de froid (15) et/ou par l'intermédiaire d'une conduite aller (18),
et dans laquelle une quantité partielle du liquide de process (11) est prélevée dans le réservoir de froid (15), refroidi via un échangeur thermique de refroidissement (19) et retourné dans le réservoir de froid (15), dans laquelle une énergie de refroidissement est transmise à l'échangeur thermique de refroidissement (19) par un circuit de refroidissement (20) comprenant un moyen de transmission de froid (21) d'une pompe à chaleur (22) et l'énergie thermique générée dans un circuit de chauffage (31) comprenant un moyen de transmission de chaleur (32) de la pompe à chaleur (22) est utilisée pour l'augmentation, si nécessaire, de la température du liquide de process (11) dans la conduite aller (18) par l'intermédiaire d'un échangeur thermique de chauffage (30),
**caractérisé en ce que**
l'énergie de refroidissement générée dans le moyen de transmission de froid (21) est introduite, via un milieu de refroidissement (23) guidé à travers le moyen de transmission de froid (21) et ainsi refroidi, dans une partie d'extrémité inférieure d'un réservoir tampon de froid (24) intégré en tant que séparateur hydraulique dans le circuit de refroidissement (20) et le milieu de refroidissement (23) est retourné d'une partie d'extrémité supérieure du réservoir tampon de froid (24) vers le moyen de transmission de froid (21),
et l'énergie thermique générée dans le moyen de transmission de chaleur (32) est introduite, via un milieu de chauffage (33) guidé à travers le moyen de transmission de chaleur (32) et ainsi chauffé, dans une partie d'extrémité supérieure d'un réservoir tampon de chaleur (35) intégré en tant que séparateur hydraulique dans le circuit de chauffage (31) et le milieu de chauffage (33) est retourné d'une partie d'extrémité supérieure du réservoir tampon de chaleur (35) vers le moyen de transmission de chaleur (32),
dans lequel le liquide de process (11) est refroidi dans le réservoir de froid (15) de manière supplémentaire, si nécessaire, au moyen d'un moyen de refroidissement de retour conçu comme une tour de refroidissement (29).

15. Procédé selon la revendication 14, **caractérisé en ce que** le milieu de refroidissement (23) est introduit dans l'échangeur thermique de refroidissement (19) à partir de la partie d'extrémité inférieure du réservoir tampon de froid (24) et, après avoir traversé l'échangeur thermique de refroidissement (19), est retourné dans la partie d'extrémité supérieure du réservoir tampon de froid (24).

16. Procédé selon la revendication 14 ou 15, **caractérisé en ce que** le milieu de chauffage est introduit dans l'échangeur thermique de chauffage (30) à partir d'une partie d'extrémité supérieure du réservoir tampon de chaleur (35) et, après avoir traversé l'échangeur thermique de chauffage (30), est retourné dans la partie d'extrémité inférieure du réservoir tampon de chaleur (35).

17. Procédé selon l'une ou plusieurs des revendications 14 à 16, **caractérisé en ce que** les températures du milieu de refroidissement (23) dans le réservoir tampon de froid (24) et les températures du milieu de chauffage dans le réservoir tampon de chaleur (35) sont mesurées au moyen de capteurs de température (25) disposés respectivement au moins dans une partie d'extrémité inférieure, dans une partie centrale et dans une partie d'extrémité supérieure du réservoir tampon de froid (24) et du réservoir tampon de chaleur (35).

18. Procédé selon l'une ou plusieurs des revendications 14 à 17, **caractérisé en ce qu'**une quantité de milieu de refroidissement (23), respectivement introduite dans le réservoir tampon de froid (24) et prélevée dans le réservoir tampon de froid (24) pour être introduite dans l'échangeur thermique de refroidissement (19), est adaptée, au moyen de pompes (28) à débit réglable, aux besoins respectifs en froid et/ou à un niveau de température nécessaire du milieu de refroidissement (23).

19. Procédé selon l'une ou plusieurs des revendications 17 ou 18, **caractérisé en ce que** les récipients (2) sont refroidis, dans une zone de refroidissement (10) disposée à la fin le long de la direction de transport (4), au moyen du liquide de process (11), à une température cible prédéterminée et la température du milieu de refroidissement (23) dans la partie d'extrémité inférieure du réservoir tampon de froid (24) est réglée à un niveau de température inférieur à cette température cible.

20. Procédé selon l'une ou plusieurs des revendications 17 à 19, **caractérisé en ce que**, lors de la mesure d'une température du milieu de refroidissement (23) dans la partie d'extrémité inférieure du réservoir tampon de froid (24) est supérieure à une température du liquide de process (11) dans le réservoir de froid (15) et/ou supérieure à une température seuil prédéterminée, au moins une quantité partielle du milieu de refroidissement (23) est retournée, via une conduite de dérivation (26), après la sortie du moyen de transmission de froid (21), directement dans le moyen de transmission de froid (21).

21. Procédé selon l'une ou plusieurs des revendications 17 à 20, **caractérisé en ce que** le milieu de refroidissement (23) n'est introduit dans l'échangeur thermique de refroidissement (19) à partir de la partie d'extrémité inférieure du réservoir tampon de froid (24) que lorsque, dans la partie d'extrémité inférieure du réservoir tampon de froid (24), un niveau de température minimale du milieu de refroidissement (23) inférieur à une température seuil prédéterminée a été réglé.

22. Procédé selon l'une ou plusieurs des revendications 14 à 21, **caractérisé en ce que**, dans les récipients (2), avant leur entrée dans une zone de chauffage (5) disposée au début dans la direction de transport (4), est introduit un gaz inerte sous forme liquide.
